# EUROPÄISCHE PATENTSCHRIFT

(11) **EP 3 702 187 B1**
(45) Veröffentlichungstag und Bekanntmachung des Hinweises auf die Patenterteilung: **09.08.2023**
(21) Anmeldenummer: 20158727.6
(22) Anmeldetag: 21.02.2020
(51) Int. Cl.: B60J 5/04

(54) **AUFPRALLSCHUTZVERSTÄRKUNG EINER FAHRZEUGKONSTRUKTION SOWIE VERBINDUNGS- UND HERSTELLUNGSVERFAHREN DAFÜR**
CRASH PROTECTION REINFORCEMENT OF A VEHICLE STRUCTURE AND CONNECTING AND MANUFACTURING METHOD FOR THE SAME
RENFORCEMENT DE PROTECTION CONTRE LES CHOCS D'UNE CONSTRUCTION DE VÉHICULE AINSI QUE PROCÉDÉ DE FABRICATION DE RACCORDEMENT ASSOCIÉ

(30) Priorität: 28.02.2019 DE 102019105188
(43) Veröffentlichungstag der Anmeldung: 02.09.2020
(73) Patentinhaber: Böllhoff Verbindungstechnik GmbH, 33649 Bielefeld (DE); Constellium Singen GmbH, 78224 Singen (DE)
(72) Erfinder: Hartwig-Biglau, Sergej, 32120 Hiddenhausen (DE); Lange, Christian, 8224 Löhningen (CH)
(74) Vertreter: Heyer, Volker

(56) Entgegenhaltungen:
- EP-A1- 1 194 317
- EP-B1- 1 194 317
- JP-A- 2013 022 622
- US-A1- 2018 236 851
- US-B1- 6 328 359

## Beschreibung

### 1. Gebiet der Erfindung

Die vorliegende Erfindung betrifft eine Aufprallschutzverstärkung einer Fahrzeugkonstruktion, die unterstützend in der Fahrzeugkonstruktion gegen die Einwirkung von äußeren mechanischen Sonderlastzuständen, wie beispielsweise ein Unfall im Straßenverkehr, befestigbar ist. Des Weiteren umfasst vorliegende Erfindung eine Fahrzeugkonstruktion mit mindestens einer Aufprallschutzverstärkung. Gegenstand vorliegender Anmeldung sind des Weiteren ein Verbindungsverfahren für eine derartige Aufprallschutzverstärkung mit einer Fahrzeugkonstruktion sowie ein Herstellungsverfahren für die Aufprallschutzverstärkung, die aus Aluminium oder einer Aluminiumlegierung besteht.

### 2. Hintergrund der Erfindung

Im Stand der Technik sind verschiedene Balkenkonstruktionen bekannt, die als Verstärkungselemente in Rahmenkonstruktionen, wie beispielsweise Fahrzeugrahmen, eingesetzt werden. Derartige Verstärkungsbalken zeichnen sich durch eine Profilform aus, um zu erwartenden Biegebelastungen stärker widerstehen zu können. Dazu werden unter anderem T-Träger oder Doppel T-Träger zur Verstärkung eingesetzt.

Eine andere Alternative besteht darin, ein Hohlprofil in einer Rahmenkonstruktion zu befestigen.

Die Verstärkungsbalken werden auf unterschiedliche Weise in Rahmenkonstruktionen verstärkend befestigt. Neben klassischen Schraub- oder Nietverbindungen ist es verbreitet, dass die verstärkende Konstruktion mit der vorhandenen Rahmenkonstruktion verschweißt wird. Dabei muss jedoch gewährleistet sein, dass eine ausreichende Zugänglichkeit zu den Schweiß- oder auch Fügestellen besteht.

JP 2013-22622 beschreibt einen Profilbalken, der durch ein Hohlprofil gebildet wird. Dieses Hohlprofil besteht aus einer Basislage und einer Decklage, die über Seitenflächen miteinander verbunden sind. Im Querschnitt zeigt der Profilbalken ein Rechteckprofil, wobei die Basislage und die Decklage eine größere Stärke als die verbindenden Seitenflächen aufweisen. Der Profilbalken ist mithilfe von Hilfsfügeelementen an einer Rahmenkonstruktion befestigt. Diese Hilfsfügeelemente durchdringen dazu nur die Basislage, um dann eine Verbindung mit der angrenzenden Rahmenstruktur herzustellen. Um den Zugang zu den Fügestellen zu ermöglichen, wurde die Decklage oberhalb der Basislage mit den Fügeelementen entfernt. Gemäß einer anderen Alternative sind in der Decklage Öffnungen angeordnet, um durch diese Öffnungen Zugriff auf die Fügeelemente in der Basislage zu erhalten. Da die Fügeelemente und somit die Verbindungsstellen in Längsrichtung des Profilbalkens angeordnet sind, nimmt zunächst nur ein verbindendes Fügeelement eine Biegung des Profilbalkens senkrecht zur Längsrichtung des Profilbalkens auf und leitet die mechanische Belastung in die Rahmenkonstruktion ab. Dabei ist es von Nachteil, dass sich die mechanische Belastung während einer Biegung des Profilbalkens nicht auf mehrere Fügeelemente und somit mehrere Fügestellen verteilt. Denn es werden nacheinander immer nur einzelne Fügestellen mechanisch belastet.

Einen Tür-Aufprall-Balken anderer Bauart beschreibt DE 10 2017 123 645 A1. Dieser Tür-Aufprall-Balken ist innerhalb eines Türrahmens eines Fahrzeugs angeordnet. Um die nötige Stabilität des Tür-Aufprall-Balkens zu erzielen, weist dieser eine Rohr-Form auf. Das Rohr wird in separate endseitige Halterungen gesteckt, um dann am Fahrzeugrahmen bzw. Türrahmen befestigt zu werden. Gemäß einer anderen Alternative werden auf die Rohrenden Stempel aufgesteckt, die dann in weiteren Bearbeitungsschritten zu Befestigungsenden flächig aufgeweitet werden. Dabei wird ebenfalls das Rohr in ein U-Profil umgeformt, um auf diese Weise die gewünschte mechanische Stabilität für den Tür-Aufprall-Balken zu erzielen. Die Umformung des Rohrs und der Rohrenden erfolgt mittels Heißpressen. Dieses Umformverfahren bringt den Nachteil mit sich, dass innere Materialschädigungen das erzeugte U-Profil schwächen können. Zudem ist ein U-Profil nur für spezielle Belastungszustände geeignet, die anders als bei einem Hohl-Profil ausfallen.

Ein weiterer Nachteil dieses Tür-Aufprall-Balkens besteht in der Anordnung seiner Fügestellen, die ihn mit der Rahmenkonstruktion, hier der Türrahmen, verbinden. Denn diese Fügestellen sind nebeneinander quer zur Längsachse des Tür-Aufprall-Balkens angeordnet. Das bedeutet zwar, dass die mechanische Biegebelastung auf die nebeneinanderliegenden Fügestellen aufgeteilt wird. Dadurch werden die einzelnen Fügestellen geringer belastet. Bei Versagen der Fügestellen auf gleicher Höhe bzw. auf gleicher Entfernung zur Biegestelle des Tür-Aufprall-Balkens ist jedoch keine weitere Fügestelle vorhanden, die in größerer Entfernung vom zentralen Biegezentrum eine mechanische Belastung auffangen kann. Somit würde ein Lösen der genutzten nebeneinander angeordneten Fügestellen den Tür-Aufprall-Balken aus der Rahmenkonstruktion herauslösen.

Unterschiedliche Zusatzverstärkungen sind ebenfalls in WO 2012/041 515 A1 beschrieben. Zum einen handelt es sich um einen Türverstärkungsbalken, der als U-ähnliches Profil in seinem Querschnitt ausgebildet ist. Dieser Türverstärkungsbalken wird über abgeflachte Endbereiche im Türrahmen befestigt. Dabei liegen, wie oben bereits beschrieben, die Befestigungspunkte in den Endbereichen auf gleicher Entfernung zu einer möglichen Biegebelastung im verstärkenden Balkenelement. Somit teilt sich die mechanische Belastung bei einer möglichen Biegebelastung des Balkens auf die endseitig angebrachten Fügestellen auf. Wenn aber die auf gleicher Entfernung angeordneten Fügestellen versagen, löst sich der Verstärkungsbalken aus der Rahmenkonstruktion.

Des Weiteren beschreibt WO 2012/041 515 A1 ein Zusatz-Verstärkungsprofil für eine B-Säule. Dieses Zusatz-Verstärkungsprofil ist in der Gestalt als U-Profil ausgebildet. Daher lässt es sich in die ebenfalls U-förmig ausgebildete B-Säule einlegen und über mehrere Fügestellen befestigen. Dieses Zusatz-Verstärkungsprofil ist somit als baugleiche, in der Länge reduzierte B-Säule realisiert, sodass sich eine mehrlagig ausgebildete B-Säulen-Konstruktion ergibt. Im Vergleich zu den Tür-Aufprall-Balken ist nicht nur die Konstruktion des Zusatzverstärkungsprofils anders, sondern auch die Befestigung des Zusatz-Verstärkungsprofils in der B-Säule. Denn das Zusatz-Verstärkungsprofil wird über eine Vielzahl von Fügestellen gleichmäßig verteilt über die gesamte Länge des Zusatz-Verstärkungsprofils an der B-Säule befestigt. Auf diese Weise können Biegebelastungen der B-Säule aus unterschiedlichen Längenbereichen der B-Säule durch das Zusatz-Verstärkungsprofil aufgenommen und abgestützt werden. Das genutzte Befestigungsprinzip besteht somit darin, nicht in den bezogen auf die Längsrichtung des Zusatz-Verstärkungsprofils angeordneten Endbereichen die Befestigung zur B-Säule vorzusehen. Stattdessen werden die Befestigungspunkte zwischen B-Säule und Zusatz-Verstärkungsprofil über die gesamte Länge des Zusatz-Verstärkungsprofils verteilt.

Zudem ist aus US 6,328,359 B1 eine Türbaugruppe für ein Fahrzeug bekannt. Die Türanordnung umfasst eine Rahmenstruktur und eine Eindringstruktur. Die Rahmenstruktur umfasst ein inneres Plattenelement und ein äußeres Plattenelement. Die Eindringstruktur weist einen stoßabsorbierenden Abschnitt auf und ist mit der Rahmenstruktur so gekoppelt, dass die Eindringstruktur an einer Außenfläche des Außenblechelements anliegt. Es wird auch ein Verfahren zum Herstellen einer Fahrzeugtüranordnung bereitgestellt.

Ein Aufprallträger, insbesondere für Kraftfahrzeuge, ist weiterhin aus EP 1 194 317 A1 bekannt. Der Aufptrallträger enthält ein Element mit einer geschlossenen Konfiguration mit einer Kammer. Über einen vorbestimmten Teil bzw. vorbestimmte Teile seiner Längenausdehnung weist der Aufprallträger nach innen vorragende Einbuchtungen an mindestens der oberen und der unteren aufeinander zu weisenden Wand des Elements auf. Die Einbuchtungen stellen eine gesteuerte plastische Verformung bei einem Aufprall sicher, die schließlich in einer Umwandlung der aus einer Kammer bestehenden Querschnittskonfiguration des Trägers zu einer zwei Kammern aufweisenden Konfiguration hin resultiert.

Bezugnehmend auf den oben diskutierten Stand der Technik ist es somit die Aufgabe vorliegender Erfindung, eine alternative Verstärkungskonstruktion zur Unterstützung einer Fahrzeugstruktur bereitzustellen, welche mechanische Sonderlastzustände effektiv abfängt und dabei verlässlich in der Fahrzeugstruktur befestigt ist.

### 3. Zusammenfassung der Erfindung

Die obige Aufgabe wird durch eine Aufprallschutzverstärkung einer Fahrzeugkonstruktion gemäß dem unabhängigen Patentanspruch 1, dem unabhängigen Patentanspruch 2 und dem unabhängigen Patentanspruch 3, eine Fahrzeugkonstruktion mit mindestens einer der oben genannten Aufprallschutzverstärkungen gemäß Patentanspruch 8, durch ein Verbindungsverfahren einer Aufprallschutzverstärkung mit einer Fahrzeugkonstruktion gemäß dem unabhängigen Patentanspruch 11 sowie durch ein Herstellungsverfahren der oben genannte Aufprallschutzverstärkung gemäß dem unabhängigen Patentanspruch 15 und dem unabhängigen Patentanspruch 17 gelöst. Weitere vorteilhafte Ausgestaltungen vorliegender Erfindung ergeben sich aus der folgenden Beschreibung, den begleitenden Zeichnungen sowie den anhängenden Patentansprüchen.

Die erfindungsgemäße Aufprallschutzverstärkung einer Fahrzeugkonstruktion, die unterstützend in der Fahrzeugkonstruktion gegen die Einwirkung von äußeren mechanischen Sonderlastzuständen befestigbar ist, weist die folgenden Merkmale auf: ein langgestrecktes Profilelement mit einer Längsmittellinie und einer quer zur Längsmittellinie angeordneten Quermittellinie, welches in Längsrichtung endseitig jeweils ein Befestigungsende und dazwischen einen Mittelteil aufweist, der Mittelteil besteht aus einem umfänglich geschlossenen Hohlprofil mit einer Basislage und einer gegenüber der Basislage angeordneten Decklage, die über Seitenflächen miteinander verbunden sind, und die Befestigungsenden weisen jeweils eine flächige Gestalt mit mindestens zwei Befestigungspunkten auf, die unterschiedlich zur Quermittellinie und zur Längsmittellinie beabstandet und als Verbindungspunkte zur Fahrzeugkonstruktion vorgesehen sind.

Die erfindungsgemäße Aufprallschutzverstärkung dient der zusätzlichen Verstärkung einer Fahrzeugkonstruktion, wie beispielsweise eines Türrahmens, eines Front- oder Heckbereichs eines Fahrzeugrahmens und weiterer Positionen, die mit Sonderlastzuständen konfrontiert werden könnten. Unter einem mechanischen Sonderlastzustand versteht man in diesem Zusammenhang den mechanischen Aufprall eines Gegenstands auf der Fahrzeugkonstruktion in dem Bereich, in dem die Aufprallschutzverstärkung angeordnet ist. Ein Gegenstand ist beispielsweise ein anderes Fahrzeug, welches im Zusammenhang mit einem Verkehrsunfall auf die Fahrzeugkonstruktion auftrifft. Zudem stellt ein Gegenstand aber auch eine massive Fahrbahnbegrenzung, einen Baum oder ein anderes Hindernis dar, die aufgrund eines nicht vorhersehbaren Bewegungswegs des Fahrzeugs gegen die Fahrzeugkonstruktion prallt. Dies ist unter anderem dann der Fall, wenn unter ungünstigen Fahrbahnbedingungen ein Fahrzeug ins Schleudern gerät, und unkontrolliert gegen einen Baum oder eine Fahrbahnbegrenzung prallt.

Die Aufprallschutzverstärkung besitzt ihre mechanische Stabilität aufgrund der Verwendung eines langgestreckten Profilelements als Mittelteil der Aufprallschutzverstärkung. Dieses Profilelement wird begrenzt durch Befestigungsenden, an denen die Aufprallschutzverstärkung mit der Fahrzeugkonstruktion verbunden wird. Um eine möglichst breite Anwendungspalette der Aufprallschutzverstärkung zu realisieren, wird ein geschlossenes Hohlprofil im Mittelteil des langgestreckten Profilelements verwendet. Aufgrund des bevorzugten umfänglich geschlossenen Hohlprofils sind unterschiedlichste Lastzustände durch das Profilelement aufnehmbar, während sich das geschlossene Hohlprofil selbst stabilisiert. In diesem Zusammenhang ist gerade das umfänglich geschlossene Hohlprofil stabiler und somit vorteilhafter als beispielsweise ein einfaches T-Profil oder ein U-förmiges Profil.

Die Befestigungsenden sind flächig gestaltet, sodass eine Mehrzahl von Befestigungspunkten in diesen Befestigungsenden anordenbar ist, die später Verbindungspunkte mit der Fahrzeugkonstruktion bilden. Zu diesem Zweck wird je nach Art der Verbindung die Aufprallschutzverstärkung gemäß einer bevorzugten Alternative zunächst mithilfe eines Fügeverfahrens mit Schweißhilfsfügeteilen ausgestattet, sodass sie nachfolgend mit beispielsweise der Fahrzeugkonstruktion verschweißt werden kann. Wird die Aufprallschutzverstärkung bevorzugt über Nägel, Stanzniete, Fließformschrauben oder Clinchverfahren mit der Fahrzeugkonstruktion verbunden, werden dafür keine Löcher oder ähnliches an den Befestigungspunkten vorgesehen. Vielmehr werden bevorzugt während des Verbindungsverfahrens mit der Fahrzeugkonstruktion (siehe unten) die Fügeelemente, wie Nägel, Stanzniete, Fließformschrauben, direkt in die Befestigungspunkte gefügt. Das Gleiche gilt für ein verbindendes Clinchverfahren, welches keiner Vorbereitung bedarf. Für eine Verschraubung an den Befestigungspunkten werden bevorzugt auch Löcher vorgesehen, über die die Verbindung hergestellt wird.

Beispielgebend für die verschiedenen Arten an Verbindungsmittel, die in vorliegender Erfindung bevorzugt genutzt werden, wird auf Schweißhilfsfügeteile Bezug genommen. Entsprechend ist an Stelle der beschriebenen Schweißhilfsfügeteile auch ein anderes Verbindungsmittel und damit in Verbindung stehendes Verbindungsverfahren anwendbar.

Die Schweißhilfsfiigeteile bilden die Grundlage, um unterschiedliche Materialien von Aufprallschutzverstärkung und Fahrzeugkonstruktion miteinander verschweißen zu können. Dabei bestehen die Schweißhilfsfügeteile aus einem Material, welches sich mit der Fahrzeugkonstruktion verschweißen lässt.

Die flächige Gestalt der Befestigungsenden gewährleistet, dass die Mehrzahl an Schweißhilfsfügeteilen oder alternativen Verbindungsmitteln bzw. Fügeelementen unter Bezugnahme auf die Quermittellinie und die Längsmittellinie der Aufprallschutzverstärkung derart angeordnet werden kann, dass mögliche Lastzustände vorteilhaft abgetragen werden und das einzelne Verschweißen der Schweißhilfsfügeteile einen möglichst geringen Einfluss auf benachbarte Fügestellen ausübt.

Aufgrund der unterschiedlichen Beabstandung von mindestens zwei Befestigungspunkten zur Quermittellinie und zur Längsmittellinie ist gewährleistet, dass während eines Belastungszustands der Aufprallschutzverstärkung die verwendeten Schweißhilfsfügeteile oder alternativen Verbindungsmitteln bzw. Fügeelementen sich gegenseitig mechanisch unterstützen. Zudem stellt die Anordnung sicher, dass bei Versagen einer ersten Verbindungsstelle die mindestens zweite Verbindungsstelle weiterhin vorhanden und intakt ist, um die Aufprallschutzverstärkung in der Fahrzeugkonstruktion zu halten. Dies wäre beispielsweise nicht der Fall, wenn die mindestens zwei Befestigungspunkte den gleichen Abstand zur Quermittellinie der Aufprallschutzverstärkung aufweisen würden. In diesem Fall könnte ein Lastzustand dazu führen, dass bei ausreichend hoher mechanischer Belastung, die auf beide Verbindungsstellen mit gleichem Betrag wirkt, diese Verbindungsstellen versagen und somit die Aufprallschutzverstärkung aus der Fahrzeugkonstruktion gelöst wird.

Erfindungsgemäß weisen die Basislage und die Decklage des Hohlprofils des Mittelteils eine größere Stärke als die verbindenden Seitenflächen auf.

Es wurde erkannt, dass innerhalb des vorteilhaften Hohlprofils gerade die mechanischen Lasten über die Decklage und die Basislage abgetragen werden. Denn diese Lagen werden durch die mechanische Belastung der Sonderlastzustände gebogen und müssen dieser Biegung ausreichend widerstehen. Die geschlossenen Seitenwände, die die Basislage und die Decklage miteinander verbinden, erzeugen eine zusätzliche Stabilität des Hohlprofils aufgrund ihrer Anordnung, die beispielsweise senkrecht oder geneigt zur Basislage und zur Decklage erfolgt. Somit wird die Stabilität des Hohlprofils einerseits durch die Stärke von Basislage und Decklage und andererseits durch die Anordnung der Seitenflächen zwischen der Basislage und der Decklage gesteigert.

Gemäß einer weiteren bevorzugten Ausführungsform vorliegender Erfindung besteht das mindestens eine Befestigungsende der Aufprallschutzverstärkung aus einem komprimierten Hohlprofil, sodass Basislage und Decklage benachbart zueinander flächig angeordnet und die Seitenflächen lateral auswärts bezogen auf die Längsmittellinie der Aufprallschutzverstärkung aufgeweitet sind.

Aufgrund der oben beschriebenen Konstruktion des mindestens einen Befestigungsendes liegen die Basislage und die Decklage bevorzugt aneinander an. Die Befestigung an der Fahrzeugkonstruktion erfolgt dann durch die bevorzugten Schweißhilfsfügeteile durch die kombinierte Basislage und Decklage hindurch an der Fahrzeugkonstruktion. Durch die stapelförmige Anordnung von Basislage und Decklage in dem mindestens einen Befestigungsende wird zunächst das Befestigungsende stabiler ausgeführt als eine Basislage oder Decklage allein. Des Weiteren führt die Kompression des Befestigungsendes dazu, dass das Hohlprofil im Bereich des Befestigungsendes seitlich aufgeweitet wird. Dadurch steht eine größere Fläche zur Befestigung des Befestigungsendes an der Fahrzeugkonstruktion bereit. Diese eröffnet bevorzugt die Möglichkeit, die Anordnung der Mehrzahl von bevorzugten Schweißhilfsfügeteilen oder alternativen Verbindungsmitteln bzw. Fügeelementen auf einen möglichen Belastungsfall abzustimmen, sodass diese Anordnung der Mehrzahl der Schweißhilfsfügeteile die Aufprallschutzverstärkung verlässlich in der Fahrzeugkonstruktion befestigt und auch im Belastungsfall hält.

Gemäß einer weiteren bevorzugten Ausführungsform vorliegender Erfindung ist mindestens ein Befestigungsende in einer Seitenansicht in Richtung der Quermittellinie keilförmig ausgebildet und die Basislage oder die Decklage ist ausgeschnitten, sodass die Befestigungspunkte und bevorzugt die Schweißhilfsfügeteile in der nicht ausgeschnittenen Decklage oder Basislage angeordnet sind.

Im Unterschied zu der oben beschriebenen Ausführungsform erfolgt gemäß der weiteren bevorzugten Ausgestaltung vorliegender Erfindung die Befestigung der Aufprallschutzverstärkung nur durch die Basislage oder die Decklage. Denn zu diesem Zweck wurde die jeweils andere Lage weggeschnitten, sodass ein ausreichender Zugang zur verbleibenden Basislage oder Decklage zum Fügen der bevorzugten Schweißhilfsfügeteile und nachfolgendem Verschweißen oder zum Verbinden der alternativen Verbindungsmittel bzw. Fügeelemente vorhanden ist. Zwar weist diese bevorzugte Konstruktion des mindestens einen Befestigungsendes nicht die gleiche Stärke wie eine Kombination aus Basislage und Decklage auf, aber es können aufgrund dieser Konstruktion gewisse räumliche Zwänge der Fahrzeugkonstruktion sowie Befestigungsmöglichkeiten der Fahrzeugkonstruktion berücksichtigt werden. Denn in ähnlicher Weise wie bei der oben beschriebenen Alternative des Befestigungsendes stellt auch ein Entfernen der Decklage oder der Befestigungslage einen ausreichenden Bereich bzw. Platz für das Fügen der bevorzugten Schweißhilfsfügeteile zur Verfügung. Der erleichterte Zugang aufgrund des Entfernens der Decklage oder der Basislage stellt sicher, dass das bevorzugte Widerstandsschweißen oder ein alternatives Verbindungsverfahren auch in Kombination mit dem als Mittelteil bevorzugt eingesetzten Hohlprofil realisiert werden kann.

Gemäß einer ersten erfindungsgemäßen Alternative sind an mindestens einem Befestigungsende nur zwei Befestigungspunkte für jeweils ein Verbindungsmittel vorgesehen, die in Querrichtung und in Längsrichtung der Aufprallschutzverstärkung voneinander beabstandet sind.

Um den Aufwand der Befestigung der Aufprallschutzverstärkung möglichst gering zu halten und auch das Fahrzeuggewicht durch die Anordnung der Aufprallschutzverstärkung nicht zusätzlich zu steigern, werden gemäß einer bevorzugten Ausführungsform vorliegender Erfindung nur zwei Verbindungsmittel, vorzugsweise zwei Schweißhilfsfügeteile, in einem oder beiden Befestigungsenden angeordnet. Zur vorteilhaften Verteilung der möglicherweise auftretenden mechanischen Lastzustände werden die zwei Verbindungsmittel, vorzugsweise Schweißhilfsfügeteile oder alternative Fügeelemente oder Befestigungsverfahren, gerade nicht nebeneinander parallel zur Quermittellinie oder zur Längsmittellinie der Aufprallschutzverstärkung positioniert. Vielmehr ist es bevorzugt, dass eine gedachte Verbindungslinie zwischen den beiden gesetzten Schweißhilfsfügeteilen oder den geplanten Befestigungspunkten in einem Winkel ungleich 0° und ungleich 90° zur Längsmittellinie und zur Quermittellinie der Aufprallschutzverstärkung angeordnet ist. Dies eröffnet die Möglichkeit, dass sich mechanische Lasten auf beide Verbindungsstellen verteilen und diese nicht gleichzeitig versagen. Des Weiteren eröffnet diese Anordnung die Möglichkeit, dass die beiden Verbindungspunkte so weit voneinander beabstandet sind, dass sie beim Widerstandsschweißen einen Nebenstromfluss über die andere Verbindungsstelle vermeiden oder zumindest reduzieren.

Gemäß einer zweiten erfindungsgemäßen Alternative sind an mindestens einem Befestigungsende nur drei Befestigungspunkte für jeweils ein Verbindungsmittel vorgesehen, von denen mindestens zwei unterschiedlich zur Quermittellinie und alle unterschiedlich zur Längsmittellinie beabstandet sind.

Gemäß dieser zweiten erfindungsgemäßen Alternative ist erfindungsgemäße die Verwendung von drei Schweißhilfsfügeteilen als Verbindungsmittel an mindestens einem Befestigungsende vorgesehen. Denn auch die Verwendung von drei Schweißhilfsfügeteilen gewährleistet, dass sich die möglicherweise auftretenden mechanischen Lasten derart verteilen, dass die drei Verbindungsstellen sich gegenseitig unterstützen und nicht gleichzeitig in einem Lastfall versagen. Zu diesem Zweck sind die drei Schweißhilfsfügeteile nicht in einer Linie angeordnet, wie beispielsweise parallel zur Quermittellinie oder parallel zur Längsmittellinie der Aufprallschutzverstärkung. Vorzugsweise bildet die Anordnung der drei Schweißhilfsfügeteile in dem mindestens einen Befestigungsende ein gleichseitiges Dreieck. In gleicher Weise ist es ebenfalls bevorzugt, dass ein gleichschenkliges Dreieck für diese Anordnung gewählt wird. Selbst wenn zwei der Schweißhilfsfügeteile nebeneinander und parallel zur Quermittellinie angeordnet sind, gewährleistet gerade das beabstandet dazu angeordnete weitere Schweißhilfsfügeteil eine vorteilhafte Verteilung der mechanischen Belastung der Verbindung zwischen Aufprallschutzverstärkung und Fahrzeugkonstruktion.

Gemäß einer weiteren bevorzugten Ausgestaltung der vorliegenden Erfindung bildet die Anordnung der drei Schweißhilfsfügeteile bzw. der drei geplanten Verbindungspunkte bzw. der drei geplanten Verbinungsmittel ein Dreieck, wobei aber keine der Seiten des Dreiecks parallel zur Quermittellinie und zur Längsmittellinie der Aufprallschutzverstärkung angeordnet ist.

Gemäß einer weiteren bevorzugten Ausführungsform vorliegender Erfindung ist lediglich eine Seite des Dreiecks parallel zur Quermittellinie oder zur Längsmittellinie der Aufprallschutzverstärkung angeordnet.

Gemäß einer dritten erfindungsgemäßen Alternative sind an mindestens einem Befestigungsende nur vier Befestigungspunkte für jeweils ein Verbindungsmittel vorgesehen, von denen mindestens zwei unterschiedlich zur Quermittellinie und mindestens zwei unterschiedlich zur Längsmittellinie der Aufprallschutzverstärkung beabstandet sind.

Die in dieser bevorzugten Ausführungsform angeordneten vier Schweißhilfsfügeteile oder alternativen Verbindungsmittel (siehe oben) bzw. die geplanten vier Befestigungspunkte in mindestens einem Befestigungsende bilden bei gemeinsamer Betrachtung ein Viereck. Dieses Viereck hat bevorzugt die Gestalt eines Quadrats, eines Parallelogramms, eines Rechtecks oder eines Trapezes. Gemäß einer bevorzugten Ausführungsform dieser Anordnung verläuft keine der Seitenflächen der viereckigen Anordnung der Schweißhilfsfügeteile bzw. der geplanten Befestigungspunkte parallel zur Quermittellinie und zur Längsmittellinie der Aufprallschutzverstärkung. Es ist aber zudem bevorzugt, dass zumindest zwei der gegenüberliegenden Seiten des Vierecks parallel zur Quermittellinie oder zur Längsmittellinie angeordnet sind. Diese Anordnung der Schweißhilfsfügeteile bzw. die Anordnung der entsprechenden Befestigungspunkte gewährleistet ebenfalls eine verlässliche Befestigung der Aufprallschutzverstärkung in der Fahrzeugkonstruktion.

In der ersten und der dritten erfindungsgemäßen Alternative ist es weiterhin bevorzugt, dass die Befestigungsenden der Aufprallschutzverstärkung eine Mehrzahl darin gefügter Schweißhilfsfügeteile aufweisen, die mit einer Fahrzeugkonstruktion aus Stahl verschweißbar ist. In der zweiten erfindungsgemäßen Alternative ist diese Ausgestaltung erfindungsgemäß. Diese Konstruktion hat den Vorteil, dass die Aufprallschutzverstärkung beispielsweise aus einem nicht oder schlecht schweißbaren Material bestehen kann. Zu derartigen Materialien zählt Aluminium, Aluminiumlegierungen, Kunststoff, faserverstärkter Kunststoff, Sandwichbauteile oder eine andere Materialkombination, die sich mit Metallen schlecht oder gar nicht verschweißen lässt. Da eine Fahrzeugkonstruktion häufig aus Stahl oder anderen Metallen besteht, werden die Befestigungsenden der Aufprallschutzverstärkung mit einer Mehrzahl von Schweißhilfsfügeteilen aus Stahl ausgestattet. Sobald diese in den Befestigungsenden in einer bevorzugten Anordnung gesetzt worden sind, lässt sich die Aufprallschutzverstärkung, im speziellen die Befestigungsenden, mit der Fahrzeugkonstruktion über ein Widerstandsschweißverfahren verbinden.

In der ersten und der dritten erfindungsgemäeßn Alternative weisen gemäß einer weiteren bevorzugten Ausführungsform vorliegender Erfindung die Befestigungsenden der Aufprallschutzverstärkung an den Befestigungspunkten jeweils eine Bohrung auf, über die die Aufprallschutzverstärkung mit einer Fahrzeugkonstruktion verschraubbar ist. Diese Ausgestaltung ist in der zweiten erfindungsgemäßen Alternative ebenfalls erfindungsgemäß. Zu diesem Zweck werden bekannte Schraubverbindungen eingesetzt, wie bspw. ein Gewindebolzen mit Mutter oder ähnliches.

Gemäß einer weiteren bevorzugten Ausführungsform vorliegender Erfindung ist die Aufprallschutzverstärkung als stranggepresstes oder als stranggegossenes Aluminiumprofil vorgesehen, welches aus Aluminium oder einer Aluminiumlegierung besteht. In diesem Zusammenhang bringt die Verwendung von Aluminium und/oder Aluminiumlegierungen den Vorteil eines geringen Gewichts bei gleichzeitiger mechanischer Stabilität mit sich. Die höheren Anforderungen beim Herstellen einer Schweißverbindung, beispielsweise mit einer Stahlkonstruktion, wird durch den Einsatz der oben bereits diskutierten Schweißhilfsfügeteile und das nachfolgende Widerstandsschweißen gelöst.

Gemäß einer weiteren bevorzugten Ausführungsform vorliegender Erfindung ist die Aufprallschutzverstärkung als rollgeformtes oder tiefgezogenes Metallteil, vorzugsweise aus Stahl oder einer Metalllegierung, oder als Metallgussteil vorgesehen ist.

Vorliegende Erfindung umfasst zudem eine Fahrzeugkonstruktion mit mindestens einer Aufprallschutzverstärkung gemäß der oben beschriebenen bevorzugten Ausführungsformen, die über die Befestigungsenden mit der Fahrzeugkonstruktion verschweißt ist.

Gemäß einer bevorzugten Ausführungsform der genannten Fahrzeugkonstruktion sind in die Befestigungsenden der Aufprallschutzverstärkung jeweils eine Mehrzahl von Schweißhilfsfügeteilen gesetzt, die über ein Widerstandsschweißverfahren mit der Fahrzeugkonstruktion verschweißt sind und eine feste Verbindung zwischen der Fahrzeugkonstruktion und der Aufprallschutzverstärkung bereitstellen.

Gemäß einer weiteren bevorzugten Ausgestaltung der Fahrzeugkonstruktion mit Aufprallschutzverstärkung sind die Befestigungsenden der Aufprallschutzverstärkung über die Mehrzahl darin vorgesehender Bohrungen mit der Fahrzeugkonstruktion verschraubt, um eine feste Verbindung zwischen der Fahrzeugkonstruktion und der Aufprallschutzverstärkung bereitzustellen.

Alternativ dazu und gemäß einer weiteren bevorzugten Ausgestaltung der Fahrzeugkonstruktion mit Aufprallschutzverstärkung sind die Befestigungsenden der Aufprallschutzverstärkung über die Mehrzahl dort vorgesehener Befestigungspunkte jeweils mit einem Stanzniet, einem Bolzen oder Nagel, einer Fließformschraube oder einer Clinchverbindung mit der Fahrzeugkonstruktion verbunden, die eine feste Verbindung zwischen der Fahrzeugkonstruktion und der Aufprallschutzverstärkung bereitstellen.

Vorliegende Erfindung offenbart zudem ein Verbindungsverfahren einer Aufprallschutzverstärkung aus stranggepresstem oder stranggezogenem Aluminium, einer Aluminiumlegierung, aus Metallguss oder aus rollgeformtem oder tiefgezogenem Metall gemäß einer der oben beschriebenen bevorzugten Ausführungsformen mit einer Fahrzeugkonstruktion. Dieses Verbindungsverfahren weist die folgenden Schritte auf: Setzen einer Mehrzahl von Schweißhilfsfügeteilen jeweils in die Befestigungsenden der Aufprallschutzverstärkung, Anordnen der Aufprallschutzverstärkung in der Fahrzeugkonstruktion und Verbinden der Befestigungsenden der Aufprallschutzverstärkung an den Befestigungspunkten mit entsprechenden Verbindungsmitteln mit der Fahrzeugkonstruktion.

Im Rahmen des bevorzugten Verbindungsverfahrens erfolgt in Kombination mit den als Verbindungsmittel bevorzugten Schweißhilfsfügeteilen als weiterer Schritt ein Setzen einer Mehrzahl von Schweißhilfsfügeteilen jeweils in die Befestigungsenden der Aufprallschutzverstärkung und ein Widerstandsverschweißen der Schweißhilfsfügeteile mit der Fahrzeugkarosserie. Gemäß einer alternativen bevorzugten Ausgestaltung des Verbindungsverfahrens weisen die Befestigungsenden der Aufprallschutzverstärkung an den Befestigungspunkten jeweils eine Bohrung auf. Basierend auf dieser konstruktiven Grundlage findet in einem weiteren Schritt ein Verschrauben der Aufprallschutzverstärkung und der Fahrzeugkonstruktion statt. Gemäß einer weiteren bevorzugten und alternativen Verfahrensalternative wird eine Mehrzahl von Stanznieten jeweils in die Befestigungsenden an den Befestigungspunkten der Aufprallschutzverstärkung und die Fahrzeugkonstruktion gesetzt. Als eine weitere bevorzugte Verfahrensalternative werden Fließformschrauben als Verbindungsmittel eingesetzt. Entsprechend erfolgt alternativ ein Setzen einer Mehrzahl von Fließformschrauben in die Befestigungsenden an den Befestigungspunkten der Aufprallschutzverstärkung und die Fahrzeugkonstruktion. Gemäß einer noch anderen Alternative des Verbindungsverfahrens werden die Aufprallschutzverstärkung und die Fahrzeugkonstruktion mit jeweils einer Clinchverbindung an den Befestigungspunkten der Befestigungsenden miteinander verbunden. Anhand der oben zusammengefassten Verbindungsalternativen wird deutlich, dass unterschiedlichste Verbindungsmittel und Verbindungsverfahren eingesetzt werden können, um die Vorteile der Aufprallschutzverstärkung in Kombination mit einer zu verstärkenden Konstruktion, wie bspw. eine Fahrzeugkonstruktion, zu nutzen.

Zudem umfasst vorliegende Erfindung ein Herstellungsverfahren einer Aufprallschutzverstärkung gemäß einer der oben beschriebenen bevorzugten Ausführungsformen aus Aluminium oder einer Aluminiumlegierung. Dieses Herstellungsverfahren weist die folgenden Schritte auf: Strangpressen oder Stranggießen eines langgestreckten Profilelements als Hohlprofil mit einer Basislage und einer Decklage, die über Seitenflächen miteinander verbunden sind, Komprimieren von mindestens einem Ende des Profilelements, sodass Basislage und Decklage benachbart zueinander angeordnet und die Seitenflächen lateral auswärts bezogen auf die Längsmittellinie der Aufprallschutzverstärkung aufgeweitet sind, und/oder Ausschneiden der Basislage oder der Decklage im Bereich des Befestigungsendes, sodass mindestens ein Befestigungsende in einer Seitenansicht in Richtung der Quermittellinie keilförmig ausgebildet ist und die Befestigungspunkte in der nicht ausgeschnittenen Decklage oder Basislage angeordnet sind, und Setzen einer Mehrzahl von Schweißhilfsfügeteilen in jedes Befestigungsende, um ein Verschweißen mittels Widerstandsschweißen der Aufprallschutzverstärkung mit einer Fahrzeugkonstruktion vorzubereiten.

Zudem umfasst vorliegende Erfindung ein alternatives Herstellungsverfahren einer der oben beschriebenen Aufprallschutzverstärkungen aus Metall oder einer Metalllegierung, welches nicht Aluminium umfasst. Dazu zählt bspw. Stahl. Dieses Herstellungsverfahren umfasst die folgenden Schritte: Rollformen, Tiefziehen oder Gießen eines langgestreckten Profilelements als Hohlprofil mit einer Basislage und einer Decklage, die über Seitenflächen miteinander verbunden sind, und Komprimieren von mindestens einem Ende des Profilelements, sodass Basis- und Decklage benachbart zueinander angeordnet und die Seitenflächen lateral auswärts bezogen auf die Längsmittellinie der Aufprallschutzverstärkung aufgeweitet sind, und/oder Ausschneiden der Basis- oder der Decklage im Bereich des Befestigungsendes, sodass mindestens ein Befestigungsende in einer Seitenansicht in Richtung der Quermittellinie keilförmig ausgebildet ist und die Befestigungspunkte in der nicht ausgeschnittenen Deck- oder Basislage angeordnet sind. Im Rahmen dieses Herstellungsverfahrens gibt es den weiteren bevorzugten Schritt: Erzeugen einer Mehrzahl von Löchern in jedem Befestigungsende, um ein Verschrauben der Aufprallschutzverstärkung mit einer Fahrzeugkonstruktion vorzubereiten.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine Seitenansicht einer bevorzugten Ausführungsform einer Aufprallschutzverstärkung gemäß vorliegender Erfindung,
- Figur 2: eine Draufsicht der bevorzugten Ausführungsform gemäß Figur 1,
- Figur 3: bevorzugte Querschnittsformen des hohlprofilartigen Mittelteils der Aufprallschutzverstärkung,
- Figur 4: eine vergrößerte Darstellung eines Befestigungsendes der bevorzugten Ausführungsform gemäß Figur 1,
- Figur 5: eine vergrößerte Darstellung einer bevorzugten Ausführungsform eines Befestigungsendes der Aufprall schutzverstärkung,

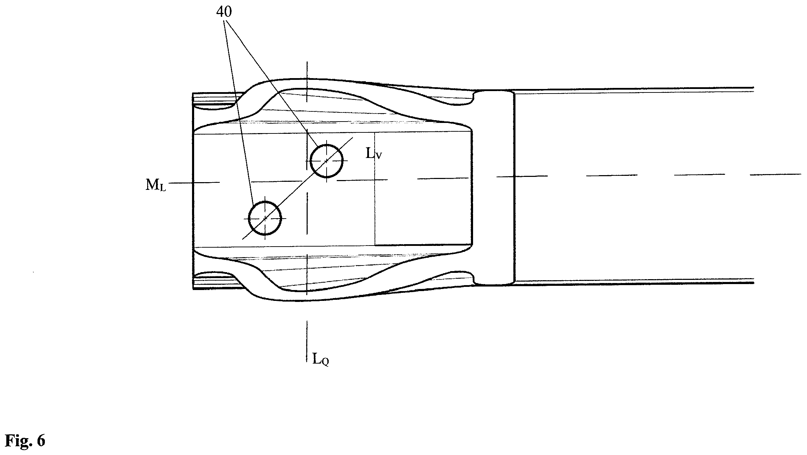

- Figur 6: eine vergrößerte Darstellung einer weiteren bevorzugten Ausführungsform eines Befestigungsendes der Aufprallschutzverstärkung,
- Figur 7: eine vergrößerte Darstellung einer weiteren bevorzugten Ausführungsform eines Befestigungsendes der Aufprallschutzverstärkung,
- Figur 8: eine vergrößerte Darstellung einer weiteren bevorzugten Ausfuhrungsform eines Befestigungsendes der Aufprallschutzverstärkung,
- Figur 9: ein Flussdiagramm einer bevorzugten Ausführungsform eines Verbindungsverfahrens der Aufprallschutzverstärkung mit einer Fahrzeugkonstruktion und
- Figur 10: ein Flussdiagramm einer bevorzugten Ausführungsform eines Herstellungsverfahrens der Aufprallschutzverstärkung.

### 5. Detaillierte Beschreibung der bevorzugten Ausführungsformen vorliegender Erfindung

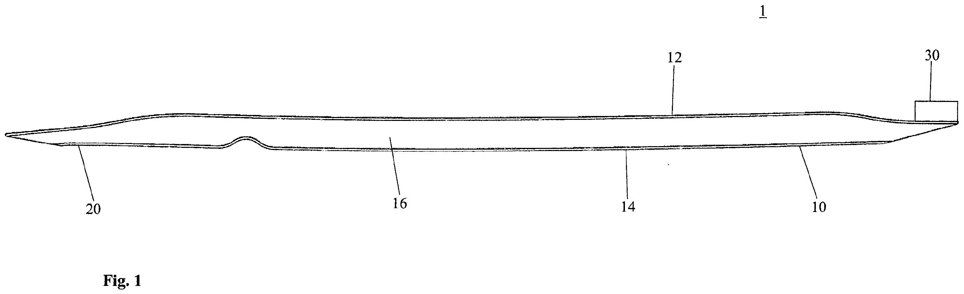

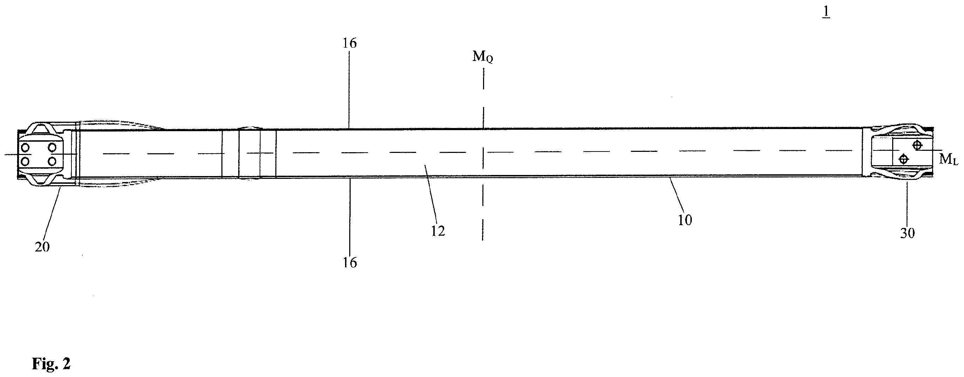

Die erfindungsgemäße Aufprallschutzverstärkung 1 ist gemäß einer bevorzugten Ausführungsform vorliegender Erfindung in Figur 1 in einer Seitenansicht und in Figur 2 in einer Draufsicht gezeigt. Die Aufprallschutzverstärkung 1 wird durch ein langgestrecktes Profilelement gebildet. Dieses besteht in einem Mittelteil 10 aus einem Hohlprofil.

Vorzugsweise wird das langgestreckte Profilelement aus Aluminium oder einer Aluminiumlegierung hergestellt. Diese Materialwahl ist aufgrund des Eigengewichts sowie der Festigkeit und Verformungseigenschaften im Vergleich zu Stählen und anderen Metallen oder Kunststoffen bevorzugt. Gemäß anderer bevorzugter Ausführungsformen vorliegender Erfindung kann die Aufprallschutzverstärkung 1 anwendungsbezogen auch aus Stahl, Kunststoff oder einem verstärkten Kunststoff bestehen.

Zur bevorzugten Herstellung der Aufprallschutzverstärkung 1 aus Aluminium oder einer Aluminiumlegierung wird das langgestreckte Profilelement 10 stranggepresst oder stranggegossen (Schritt H 1). Um eine passende Länge der Aufprallschutzverstärkung 1 einzustellen, wird das stranggepresste oder stranggegossene Hohlprofil 10 geeignet abgelängt. Danach setzt sich die Verarbeitung fort.

Wird die Aufprallschutzverstärkung aus Stahl oder einem anderen Metall, welches nicht Aluminium umfasst, oder einer anderen Metalllegierung ohne Aluminium hergestellt, nutzt man das Rollformen, Tiefziehen oder Gießen eines langgestreckten Profilelements als Hohlprofil.

Im Weiteren wird die Konstruktion der Aufprallschutzverstärkung 1 am Beispiel der Aufprallschutzverstärkung 1 aus Aluminium oder einer Aluminiumlegierung beschrieben. Diese ist beispielgebend für eine Aufprallschutzverstärkung 1, die aus einem der oben genannten oder einem anderen geeigneten Material aufgebaut sein kann.

Das langgestreckte Hohlprofil des Mittelteils 10 umfasst eine Basislage 12 und eine Decklage 14. Die Basis- 12 und Decklage 14 sind vorzugsweise parallel zueinander angeordnet und über Seitenflächen 16 miteinander verbunden. Es ist ebenfalls bevorzugt, dass Basis- 12 und Decklage 14 konvergierend zueinander angeordnet und über die Seitenflächen 16 miteinander verbunden sind.

Vorzugsweise bildet die Kombination aus Basis- 12, Decklage 14 sowie Seitenflächen 16 ein umfänglich geschlossenes Hohlprofil.

Erfindungsgemäß bevorzugt weist die Aufprallschutzverstärkung 1 an jedem Ende der langgestreckten Profilkonstruktion ein Befestigungsende 20; 30 auf. Über die beiden Befestigungsenden 20; 30 wird die Aufprallschutzverstärkung 1 mit einer Fahrzeugkonstruktion oder einer anderen Rahmenkonstruktion verbunden und diese dadurch verstärkt.

Die Basislage 12 und die Decklage 14 lassen sich über eine Längsmittellinie M_{L} und eine Quermittellinie M_{Q} beschreiben. Die Längsmittellinie M_{L} erstreckt sich in Längsrichtung von Basis- 12 oder Decklage 14 in der Mitte davon (siehe Figur 1). Die Quermittellinie M_{Q} unterteilt die Aufprallschutzverstärkung 1 quer zur Längsrichtung in zwei Hälften (siehe Figur 1). Zur weiteren Beschreibung der bevorzugten Konstruktion der Aufprallschutzverstärkung 1 verlaufen die Längsmittellinie M_{L} und die Quermittellinie M_{Q} in der Ebene der Basislage 12, wie es in Figur 2 gezeigt ist.

Um die erfindungsgemäß bevorzugte Stabilität der Auprallschutzverstärkung 1 zu erzielen, weisen die Basislage 12 und die Decklage 14 eine größere Materialstärke auf als die verbindenden Seitenflächen 16. Anwendungsfall bezogen ist es ebenfalls bevorzugt, die Basislage 12, die Decklage 14 und die Seitenflächen 16 in gleicher Materialstärke vorzusehen. Zur Erzielung von Gewichtsersparnissen bietet es sich aber an, die Nutzung von Seitenflächen 16 geringerer Materialstärke im Vergleich zur Basislage 12 und zur Decklage 14 zu nutzen.

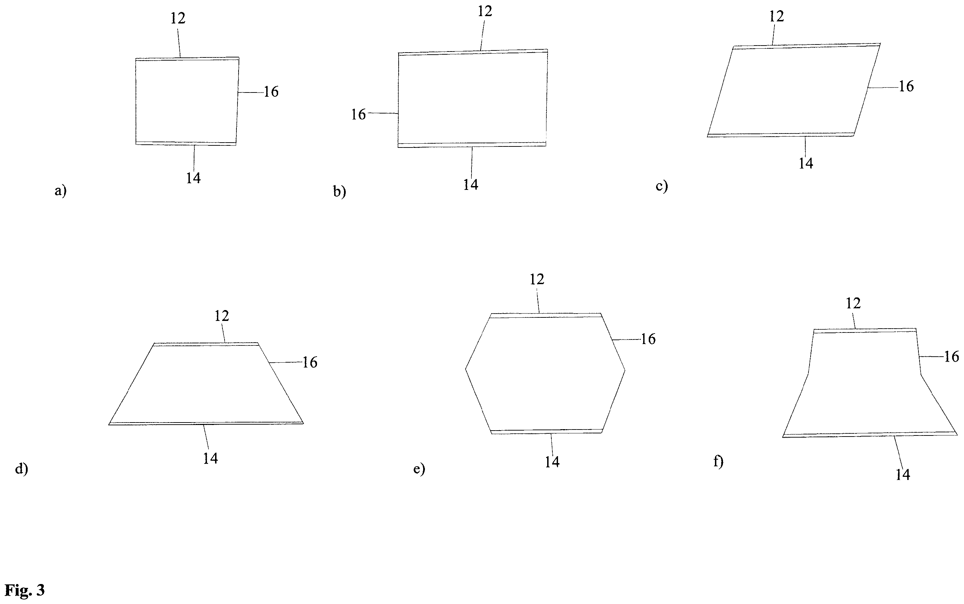

Gemäß einer ersten bevorzugten Ausführungsform des geschlossenen Hohlprofils des Mittelteils 10 weist der Querschnitt die Form eines Quadrats auf. Weiter bevorzugt sind ebenfalls Querschnittsgestalten in Form eines Rechtecks oder Parallelogramms oder Trapezes oder eines Polygons. Entsprechend nutzbare Querschnitte des hohlprofilartigen Mittelteils 10 zeigt Figur 3.

Mithilfe der unterschiedlichen Querschnitte des hohlprofilartigen Mittelteils 10 wird die Aufprallschutzverstärkung 1 an mögliche mechanische Sonderlastzustände und die dazu nötigen Verstärkungen angepasst. Mechanische Sonderlastzustände bezeichnen mechanische Belastungen einer Rahmenkonstruktion, wie beispielsweise einer Fahrzeugkonstruktion, die nicht permanent oder zyklisch, sondern nur in Ausnahmesituationen auftreten. Bezogen auf ein Kraftfahrzeug ist ein mechanischer Sonderlastzustand ein Verkehrsunfall, eine Kollision mit einem Hindernis aufgrund ungünstiger Fahrbahnbedingungen oder Ähnliches. Durch einen Sonderlastzustand wird die Rahmenkonstruktion einer mechanischen Belastung unterzogen, für die sie standardmäßig nicht ausgelegt sein muss. Um dennoch diesem Sonderlastzustand ausreichend widerstehen zu können, wird die Rahmenkonstruktion mit der Aufprallschutzverstärkung 1 in Bereichen verstärkt, wo Sonderlastzustände auftreten können.

So zeigt Figur 3 als nicht abschließende Beispielgestaltungen des Querschnitts des hohlprofilartigen Mittelteils 10 folgende Formen: A) ein Quadrat, B) ein Rechteck, C) ein Parallelogramm, D) ein Trapez sowie E) und F) ein Polygon. Es ist ebenfalls bevorzugt, ein achteckiges Polygon als Querschnitt zu nutzen.

Wird vorzugsweise davon ausgegangen, dass ein mechanischer Sonderlastzustand in Normalenrichtung der Basislage 12 oder der Decklage 14 wirkt, wird die Aufprallschutzverstärkung 1 auf Biegung entlang der Längsmittellinie M_{L} belastet. Dieser Biegebelastung wirken die unterschiedlichen Formgestaltungen der Seitenflächen 16 bevorzugt entgegen.

Gemäß einer weiteren bevorzugten Ausführungsform ist das Hohlprofil des Mittelteils 10 bis auf die Befestigungsenden 20; 30 umfänglich geschlossen ausgebildet. Gemäß einer weiteren bevorzugten Ausführungsform des hohlprofilartigen Mittelteils 10 erstrecken sich die Basislage 12 und die Decklage 14 zumindest über 70 % ihrer Länge parallel zueinander.

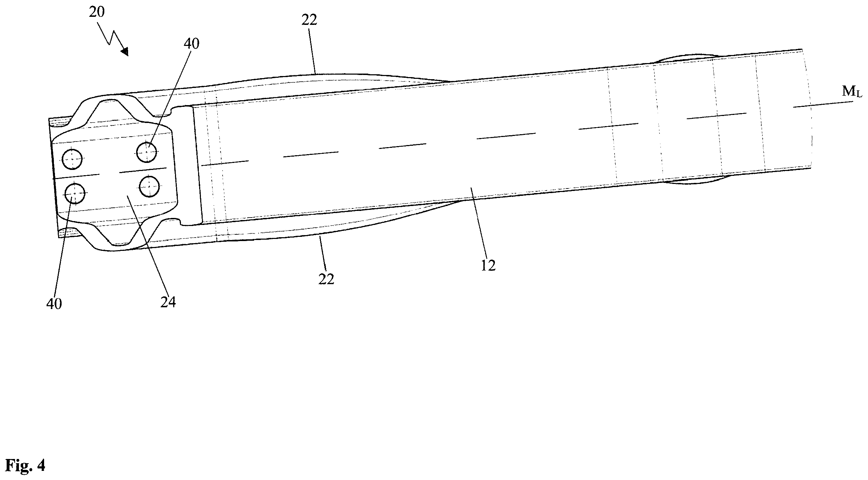

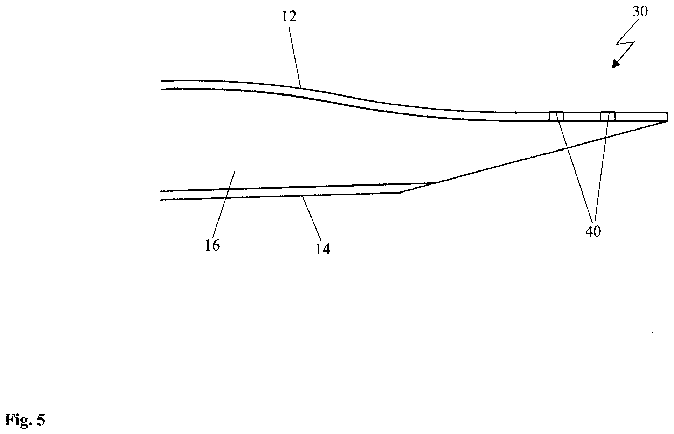

Unterschiedliche bevorzugte Ausgestaltungen der Befestigungsenden 20; 30 sind in den Figuren 4 und 5 dargestellt. Es ist bevorzugt, nur eine Konstruktionsweise für beide Befestigungsenden 20; 30 zu nutzen. In gleicher Weise ist es bevorzugt, die Befestigungsenden 20; 30 in unterschiedlichen Konstruktionsweisen vorzusehen.

Eine erste bevorzugte Konstruktionsweise der Befestigungsenden 20; 30 wird am Beispiel des Befestigungsendes 20 in Figur 4 beschrieben. Am Befestigungsende 20 wurden die Basislage 12 und die Decklage 14 aufeinander zugedrückt, also komprimiert. Dadurch liegen die Basislage 12 und die Decklage 14 vorzugsweise aneinander an und verstärken dadurch das Befestigungsende 20.

Durch das Komprimieren des Hohlprofils im Bereich des Befestigungsendes 20 werden die Seitenflächen 16 vorzugsweise seitlich nach außen verformt, sodass sich äußere Falten 22 ergeben. Diese Falten 22, die einander gegenüberliegend angeordnet sind, verbreiten vorzugsweise die durch die Basislage 12 oder die Decklage 14 bereitgestellte Befestigungsfläche 24 des Befestigungsendes 20.

Zur Befestigung des Befestigungsendes 20 an einer Rahmenkonstruktion ist vorzugsweise eine Mehrzahl von Schweißhilfsfügeteilen 40 vorgesehen. Die bevorzugten Schweißhilfsfügeteile 40 bestehen aus einem schweißbaren Material, um mit der Rahmenkonstruktion oder einer Fahrzeugkonstruktion verschweißt zu werden. Ähnlich einem Vollstanzniet oder einem Schweißbolzen, dies ist in DE 10 2012 010 870, DE 10 2012 018 866 oder DE 10 2017 115 229 beschrieben, wird die Mehrzahl an Schweißhilfsfügeteilen 40 durch die Basislage 12 und die Decklage 14 in das Befestigungsende 20 gesetzt. Entsprechend stützt sich jeweils ein Kopf des Schweißhilfsfügeteils 40 an der Basislage 12 oder der Decklage 14 ab und ein Schaft des Schweißhilfsfügeteils 40 ragt an der gegenüberliegenden Decklage 14 oder der Basislage 12 hervor. Entsprechend steht der überragende Schaftbereich zur Verfügung, um mit einer Rahmenkonstruktion oder einer Fahrzeugkonstruktion verschweißt zu werden. Dazu wird vorzugsweise ein Widerstandsschweißverfahren verwendet.

Als erfindungsgemäß bevorzugte alternative Verbindungsmittel werden an Stelle der Schweißhilfsfügeteile Stanzniete, Nägel oder Setzbolzen, Fließformschrauben oder Schraube-Mutter-Kombinationen an den Befestigungspunkten der Befestigungsenden genutzt. Es versteht sich, dass Schraube-Mutter-Kombinationen nur in Kombination mit einem zuvor am Befestigungspunkt vorgesehenen Loch realisiert werden können. Im Vergleich dazu werden bevorzugte Stanzniete, Nägel, Bolzen und Fließformschrauben direkt verbindend an den Befestigungspunkten gefügt. Zudem ist auch das Clinchen als ein Verbindungsverfahren ohne Hilfsfügeteil bevorzugt einsetzbar. Im Weiteren wird die bevorzugte Befestigung der Aufprallschutzverstärkung mit Schweißhilfsfügeteilen beschrieben. Die Befestigung mit Schweißhilfsfügeteilen ist exemplarisch die Befestigung mit anderen oben genannten Verbindungsmitteln und auf diese analog übertragbar.

Gemäß einer weiteren bevorzugten Konstruktion des Befestigungsendes 30 ist dieses in einer Seitenansicht keilförmig ausgebildet (siehe Figur 5). Die bevorzugte Keilform entsteht, in dem vom Ende der Decklage 14 ein Teil in Richtung Quermittellinie M_{Q} entfernt worden ist. Dadurch ist in diesem Bereich die Basislage 12 frei zugänglich, um die Schweißhilfsfiigeteile 40 darin zu setzen und nachfolgend zu verschweißen. Anhand von Figur 5 ist erkennbar, dass sich der Kopf des Schweißhilfsfügeteils 40 an der Basislage 12 der Decklage 14 zugewandt abstützt. An der der Decklage 14 abgewandten Seite der Basislage 12 ragt der Schaft des Schweißhilfsfügeteils 40 hervor, um mittels Widerstandsschweißen verschweißt werden zu können.

Vorzugsweise ist die Decklage 14 so weit ausgeschnitten bzw. verkürzt im Bereich des Befestigungsendes 30, dass die Schweißhilfsfügeteile 40 für die Schweißelektroden zum Widerstandsschweißen gut zugänglich sind.

Es ist in gleicher Weise bevorzugt, die Basislage 12 auszuschneiden und die Schweißhilfsfiigeteile 40 in die Decklage 14 zu setzen.

Gemäß unterschiedlicher bevorzugter Ausführungsformen vorliegender Erfindung werden die Befestigungsenden 20; 30 über eine Mehrzahl von Schweißhilfsfügeteilen 40 mit einer Rahmenkonstruktion mittels Widerstandsschweißen verschweißt. Dazu werden die Schweißhilfsfügeteile 40 zuvor in die Befestigungsenden 20; 30 gesetzt, wie es oben beschrieben worden ist.

Gemäß einer bevorzugten Ausführungsform vorliegender Erfindung werden die Schweißhilfsfügeteile 40 im Rahmen des Herstellungsverfahrens der Aufprallschutzverstärkung 1 in die Befestigungsenden 20; 30 gesetzt.

Gemäß einer anderen bevorzugten Ausführungsform vorliegender Erfindung werden die Schweißhilfsfügeteile 40 im Rahmen des Verbindungsverfahrens der Aufprallschutzverstärkung 1 mit der Rahmenkonstruktion vor dem Verschweißen der Aufprallschutzverstärkung 1 mit der Rahmenkonstruktion in die Befestigungsenden 20; 30 gesetzt.

Gemäß einer ersten bevorzugten Ausgestaltung werden zwei Schweißhilfsfügeteile 40 in das Befestigungsende 20; 30 gesetzt. Die zwei Schweißhilfsfügeteile 40 werden an Befestigungspunkten positioniert, die in Richtung der Längsmittellinie M_{L} und der Quermittellinie M_{Q} voneinander beabstandet sind. Entsprechend liegen die nur zwei Schweißhilfsfügeteile 40 nicht gemeinsam auf der Längsmittellinie M_{L} und einer Linie L_{Q} parallel zur Quermittellinie M_{Q}. Vorzugsweise sind die beiden Befestigungspunkte oder bereits gesetzten Schweißhilfsfiigeteiie 40 auf einer Verbindungslinie L_{V} angeordnet, die ungleich einem Winkel von 0° oder von 90° zur Längsmittellinie M_{L} und zur Quermittellinie M_{Q} geneigt angeordnet ist.

Es ist zudem bevorzugt, dass die Schweißhilfsfügeteile 40 entlang der Verbindungslinie L_{V} in einem vordefinierten Bereich voneinander beabstandet sind. Dieser Abstand bzw. Bereich ist bevorzugt derart gewählt, dass eine Gefahr des elektrischen Nebenschlusses über eine benachbarte Verbindung während des Widerstandsschweißens reduziert ist.

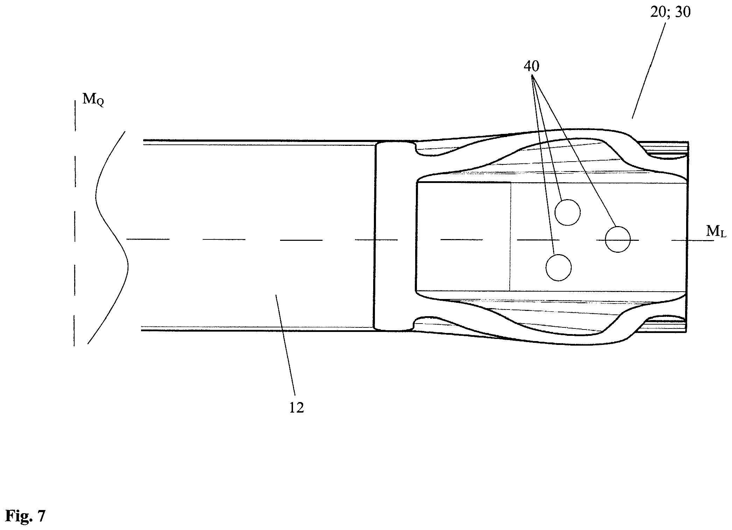

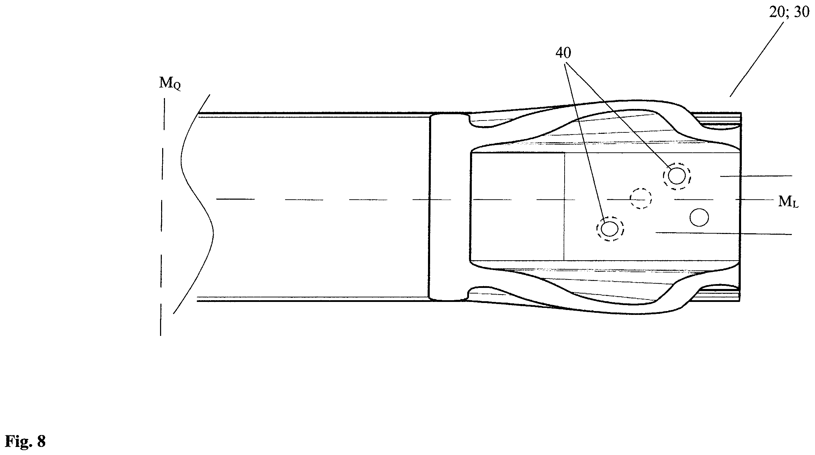

Gemäß Figur 7 ist es zudem erfindungsgemäß gemäß der zweiten erfindungsgemäßen Alternative, mindestens ein Befestigungsende 20; 30 mithilfe von nur drei Schweiß3hilfsfiigeteilen 40 zu befestigen. Diese werden in das flächige Befestigungsende 20; 30 derart gesetzt, dass mindestens zwei der Befestigungspunkte unterschiedlich zur Quermittellinie M_{Q} und alle drei der Befestigungspunkte unterschiedlich zur Längsmittellinie M_{L} beabstandet und angeordnet sind. Anhand der Figuren 7 und 8 wird deutlich, dass die Schweißhilfsfügeteile 40 in der gleichen Entfernung zur Längsmittellinie M_{L} angeordnet sein können. Da aber ein Schweißhilfsfügeteil 40 oberhalb und ein Schweißhilfsfügeteil 40 unterhalb der Längsmittellinie M_{L} bzw. ein Schweißhilfsfügeteil 40 rechts und ein Schweißhilfsfügeteil 40 links neben der Längsmittellinie M_{L} angeordnet bzw. positioniert ist, ergibt sich das bevorzugte Befestigungsmuster, in welchem alle drei Befestigungspunkte oder Schweißhilfsfiigeteile unterschiedlich zur Längsmittellinie M_{L} beabstandet und positioniert sind.

Entsprechend bilden die Schweißhilfsfügeteile 40 oder die vorgewählten Befestigungspunkte folgende Formen: ein gleichschenkliges Dreieck (Figur 7), ein gleichseitiges Dreieck (nicht gezeigt), ein ungleichseitiges Dreieck (Figur 8) oder eine Linie (siehe Figur 8 mit den gestrichelt gezeichneten Schweißhilfsfügeteilen 40).

Gemäß einer weiteren bevorzugten Ausführungsform vorliegender Erfindung (siehe Figur 4) ist mindestens ein Befestigungsende 20; 30 mit nur vier Schweißhilfsfügeteilen 40 an vier Befestigungspunkten befestigt. Mindestens zwei der Schweißhilfsfügeteile 40 sind unterschiedlich zur Quermittellinie M_{Q} beabstandet und mindestens zwei der Schweißhilfsfügeteile 40 sind unterschiedlich zur Längsmittellinie M_{L} beabstandet und positioniert. Unter obiger Bedingung bilden die nur vier Schweißhilfsfügeteile 40 eine der folgenden Formen: ein Quadrat, ein Rechteck, ein Parallelogramm, ein Trapez, ein unregelmäßiges Viereck oder ein Dreieck.

Des Weiteren umfasst vorliegende Erfindung das bereits oben angesprochene Verbindungsverfahren der Aufprallschutzverstärkung 1 mit einer Fahrzeugkonstruktion oder einer Rahmenkonstruktion. Dieses Verbindungsverfahren weist die folgenden Schritte auf: Anordnen der Aufprallschutzverstärkung 1 in der Fahrzeugkonstruktion im Schritt V 1. Nachfolgend wird die Aufprallschutzverstärkung über die vorhandenen Schweißhilfsfügeteile 40 in den Befestigungsenden 20; 30 mit der Fahrzeugkonstruktion mittels Widerstandsschweißen verbunden (Schritt V 2).

Im Rahmen dieses Verbindungsverfahrens ist es ebenfalls bevorzugt, als vorbereitenden Schritt zunächst die Mehrzahl von Schweißhilfsfiigeteiien 40 in die Befestigungsenden 20; 30 der Aufprallschutzverstärkung 1 zu setzen.

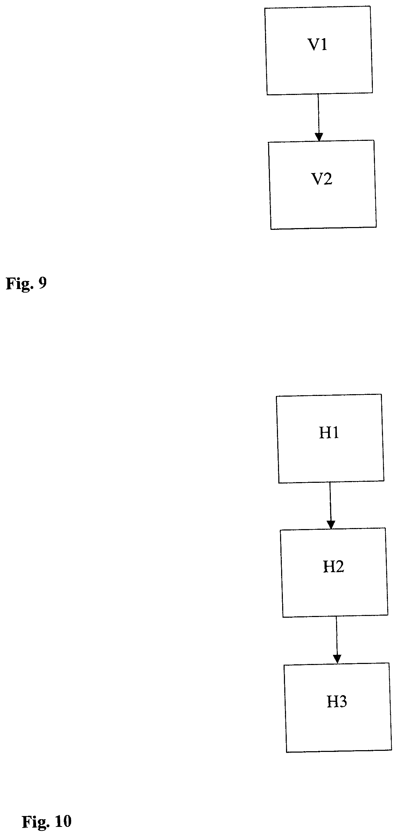

Das Verbindungsverfahren ist gemäß einer bevorzugten Ausführungsform in Figur 9 anhand eines Flussdiagramms veranschaulicht.

Zudem liefert vorliegende Erfindung das bereits oben angesprochene Herstellungsverfahren der Aufprallschutzverstärkung 1 aus Aluminium oder einer Aluminiumlegierung. Nachdem das langgestreckte Profilelement als Hohlprofil stranggepresst oder stranggegossen worden ist (Schritt H 1), werden die beiden Befestigungsenden 20; 30 ausgebildet. Diese Befestigungsenden 20; 30 weisen vorzugsweise die gleiche Form oder unterschiedliche Formen auf.

Gemäß einer ersten Alternative erfolgt im Schritt H2 ein Komprimieren von mindestens einem Ende des Profilelements, sodass die Basislage 12 und die Decklage 14 benachbart zueinander angeordnet sind und die Seitenflächen 16 lateral auswärts bezogen auf die Längsmittellinie M_{L} der Aufprallschutzverstärkung 1 aufgeweitet worden sind.

Alternativ dazu ist es ebenfalls bevorzugt, dass im Schritt H2 die Basislage 12 oder die Decklage 14 im Bereich des Befestigungsendes 20; 30 ausgeschnitten wird, sodass mindestens ein Befestigungsende 20; 30 in einer Seitenansicht in Richtung der Quermittellinie M_{Q} keilförmig ausgebildet ist. Entsprechend sind die Befestigungspunkte für die Schweißhilfsfügeteile 40 in der nicht ausgeschnittenen Decklage 14 oder der Basislage 12 angeordnet.

Weiterhin bevorzugt kann das vorbereitende Setzen der Schweißhilfsfügeteile 40 in den Befestigungsenden 20; 30 als Teilschritt des Herstellungsverfahrens erfolgen. Entsprechend wird eine Mehrzahl von Schweißhilfsfügeteilen 40 in jedes Befestigungsende 20; 30 gesetzt, um ein Verschweißen mittels Widerstandsschweißen der Aufprallschutzverstärkung 1 mit einer Fahrzeugkonstruktion vorzubereiten.

Die einzelnen Schritte des oben beschriebenen Herstellungsverfahrens sind anhand eines Flussdiagramms in Figur 10 veranschaulicht.

## Patentansprüche

1. Eine Aufprallschutzverstärkung (1) einer Fahrzeugkonstruktion, die unterstützend in der Fahrzeugkonstruktion gegen die Einwirkung von äußeren mechanischen Sonderlastzuständen befestigbar ist und die folgenden Merkmale aufweist:
a. ein langgestrecktes Profilelement mit einer Längsmittellinie (M_{L}) und einer quer zur Längsmittellinie (M_{L}) angeordneten Quermittellinie (M_{Q}), welches in Längsrichtung endseitig jeweils ein Befestigungsende (20; 30) und dazwischen einen Mittelteil (10) aufweist,
b. der Mittelteil (10) besteht aus einem umfänglich geschlossenen Hohlprofil mit einer Basislage (12) und einer gegenüber der Basislage (12) angeordneten Decklage (14), die über Seitenflächen (16) miteinander verbunden sind, und
c. die Befestigungsenden (20; 30) weisen jeweils eine flächige Gestalt mit mindestens zwei Befestigungspunkten auf, die unterschiedlich zur Quermittellinie (M_{Q}) und zur Längsmittellinie (M_{L}) beabstandet und als Verbindungspunkte, insbesondere als Schweißverbindungspunkte, zur Fahrzeugkonstruktion vorgesehen sind, **dadurch gekennzeichnet, dass**
d. die Basislage (12) und die Decklage (14) des Hohlprofils des Mittelteils (10) eine größere Stärke aufweisen als die verbindenden Seitenflächen (16) und
e. die Aufprallschutzverstärkung (1) an mindestens einem Befestigungsende (20; 30) nur zwei Befestigungspunkte für jeweils ein Verbindungsmittel (40) vorsieht, die in Quer- und in Längsrichtung der Aufprallschutzverstärkung (1) voneinander beabstandet sind.

2. Eine Aufprallschutzverstärkung (1) einer Fahrzeugkonstruktion, die unterstützend in der Fahrzeugkonstruktion gegen die Einwirkung von äußeren mechanischen Sonderlastzuständen befestigbar ist und die folgenden Merkmale aufweist:
a. ein langgestrecktes Profilelement mit einer Längsmittellinie (M_{L}) und einer quer zur Längsmittellinie (M_{L}) angeordneten Quermittellinie (M_{Q}), welches in Längsrichtung endseitig jeweils ein Befestigungsende (20; 30) und dazwischen einen Mittelteil (10) aufweist,
b. der Mittelteil (10) besteht aus einem umfänglich geschlossenen Hohlprofil mit einer Basislage (12) und einer gegenüber der Basislage (12) angeordneten Decklage (14), die über Seitenflächen (16) miteinander verbunden sind, und
c. die Befestigungsenden (20; 30) weisen jeweils eine flächige Gestalt mit mindestens zwei Befestigungspunkten auf, die unterschiedlich zur Quermittellinie (M_{Q}) und zur Längsmittellinie (M_{L}) beabstandet und als Verbindungspunkte, insbesondere als Schweißverbindungspunkte, zur Fahrzeugkonstruktion vorgesehen sind, **dadurch gekennzeichnet, dass**
d. die Basislage (12) und die Decklage (14) des Hohlprofils des Mittelteils (10) eine größere Stärke aufweisen als die verbindenden Seitenflächen (16) und
e. die Aufprallschutzverstärkung (1) an mindestens einem Befestigungsende (20; 30) nur drei Befestigungspunkte für jeweils ein Verbindungsmittel (40) vorsieht, von denen mindestens zwei unterschiedlich zur Quermittellinie (M_{Q}) und alle unterschiedlich zur Längsmittellinie (M_{L}) beabstandet und positioniert sind, wobei die Befestigungsenden (20; 30) der Aufprallschutzverstärkung (1) an den Befestigungspunkten
el. jeweils ein darin gefügtes Schweißhilfsfügeteil (40) aufweist, welches mit einer Fahrzeugkonstruktion aus Stahl verschweißbar ist, oder
e2. jeweils eine Bohrung aufweist, über die die Aufprallschutzverstärkung mit einer Fahrzeugkonstruktion verschraubbar ist.

3. Eine Aufprallschutzverstärkung (1) einer Fahrzeugkonstruktion, die unterstützend in der Fahrzeugkonstruktion gegen die Einwirkung von äußeren mechanischen Sonderlastzuständen befestigbar ist und die folgenden Merkmale aufweist:
a. ein langgestrecktes Profilelement mit einer Längsmittellinie (M_{L}) und einer quer zur Längsmittellinie (M_{L}) angeordneten Quermittellinie (M_{Q}), welches in Längsrichtung endseitig jeweils ein Befestigungsende (20; 30) und dazwischen einen Mittelteil (10) aufweist,
b. der Mittelteil (10) besteht aus einem umfänglich geschlossenen Hohlprofil mit einer Basislage (12) und einer gegenüber der Basislage (12) angeordneten Decklage (14), die über Seitenflächen (16) miteinander verbunden sind, und
c. die Befestigungsenden (20; 30) weisen jeweils eine flächige Gestalt mit mindestens zwei Befestigungspunkten auf, die unterschiedlich zur Quermittellinie (M_{Q}) und zur Längsmittellinie (M_{L}) beabstandet und als Verbindungspunkte, insbesondere als Schweißverbindungspunkte, zur Fahrzeugkonstruktion vorgesehen sind, **dadurch gekennzeichnet, dass**
d. die Basislage (12) und die Decklage (14) des Hohlprofils des Mittelteils (10) eine größere Stärke aufweisen als die verbindenden Seitenflächen (16) und
e. die Aufprallschutzverstärkung (1) an mindestens einem Befestigungsende (20; 30) nur vier Befestigungspunkte für jeweils ein Verbindungsmittel (40) vorsieht, von denen mindestens zwei unterschiedlich zur Quermittellinie (M_{Q}) und mindestens zwei unterschiedlich zur Längsmittellinie (M_{L}) der Aufprallschutzverstärkung (1) beabstandet sind.

4. Aufprallschutzverstärkung (1) gemäß einem der Patentansprüche 1, 2 oder 3, in der mindestens ein Befestigungsende (20; 30) aus einem komprimierten Hohlprofil besteht, sodass Basis- (12) und Decklage (14) benachbart zueinander flächig angeordnet und die Seitenflächen (16) lateral auswärts bezogen auf die Längsmittellinie (M_{L}) der Aufprallschutzverstärkung (1) aufgeweitet sind.

5. Aufprallschutzverstärkung (1) gemäß einem der Patentansprüche 1 bis 4, in der mindestens ein Befestigungsende (20; 30) in einer Seitenansicht in Richtung der Quermittellinie (M_{Q}) keilförmig ausgebildet und die Basis- (12) oder die Decklage (14) ausgeschnitten ist, sodass die Befestigungspunkte in der nicht ausgeschnittenen Deck- (14) oder Basislage (12) angeordnet sind.

6. Aufprallschutzverstärkung (1) gemäß Patentanspruch 1 oder 3, deren Befestigungsenden (20; 30) an den Befestigungspunkten jeweils ein darin gefügtes Schweißhilfsfügeteil (40) aufweist, welches mit einer Fahrzeugkonstruktion aus Stahl verschweißbar ist, oder deren Befestigungsenden (20; 30) an den Befestigungspunkten jeweils eine Bohrung aufweist, über die die Aufprallschutzverstärkung mit einer Fahrzeugkonstruktion verschraubbar ist.

7. Aufprallschutzverstärkung (1) gemäß einem der vorhergehenden Patentansprüche, die
a) als stranggepresstes oder als stranggegossenes Aluminiumprofil bestehend aus Aluminium oder einer Aluminiumlegierung vorgesehen ist oder die
b) als rollgeformtes oder tiefgezogenes Metallteil, vorzugsweise aus Stahl oder einer Metalllegierung, oder als Metallgussteil vorgesehen ist.

8. Eine Fahrzeugkonstruktion mit mindestens einer Aufprallschutzverstärkung (1) gemäß einem der vorhergehenden Patentansprüche, die über die Befestigungsenden (20; 30) mit der Fahrzeugkonstruktion verbunden ist.

9. Fahrzeugkonstruktion gemäß Patentanspruch 8 in Kombination mit Patentanspruch 7 in Bezug auf
a) Patentanspruch 2, Alternative el, oder Patentanspruch 6, erste Alternative, wobei die in die Befestigungsenden (20; 30) der Aufprallschutzverstärkung (1) gesetzten Schweißhilfsfügeteile (40) über ein Widerstandsschweißverfahren mit der Fahrzeugkonstruktion verschweißt sind und eine feste Verbindung zwischen der Fahrzeugkonstruktion und der Aufprallschutzverstärkung (1) bereitstellen, oder in Bezug auf
b) Patentanspruch2, Alternative e2, oder Patentanspruch 6, zweite Alternative, wobei die Befestigungsenden (20; 30) der Aufprallschutzverstärkung (1) über die Mehrzahl darin vorgesehender Bohrungen mit der Fahrzeugkonstruktion verschraubt sind und eine feste Verbindung zwischen der Fahrzeugkonstruktion und der Aufprallschutzverstärkung (1) bereitstellen.

10. Fahrzeugkonstruktion gemäß Patentanspruch 8 in Kombination mit Patentanspruch 7 in Bezug auf Patentanspruch 1, 2 oder 3, wobei die Befestigungsenden (20; 30) der Aufprallschutzverstärkung (1) über die Mehrzahl dort vorgesehener Befestigungspunkte jeweils mit einem Stanzniet, einem Bolzen oder Nagel, einer Fließformschraube oder einer Clinchverbindung mit der Fahrzeugkonstruktion verbunden sind und eine feste Verbindung zwischen der Fahrzeugkonstruktion und der Aufprallschutzverstärkung (1) bereitstellen.

11. Ein Verbindungsverfahren einer Aufprallschutzverstärkung (1) nach Patentanspruch 7 mit einer Fahrzeugkonstruktion, welches die folgenden Schritte aufweist:
V1) Anordnen der Aufprallschutzverstärkung (1) in der Fahrzeugkonstruktion und
V2) Verbinden der Befestigungsenden (20; 30) der Aufprallschutzverstärkung (1) an den Befestigungspunkten mit der Fahrzeugkonstruktion.

12. Verbindungsverfahren gemäß Patentanspruch 11 mit der ersten Alternative nach Patentanspruch 7, mit dem weiteren Schritt:
Setzen einer Mehrzahl von Schweißhilfsfügeteilen (40) jeweils in die Befestigungsenden (20; 30) der Aufprallschutzverstärkung (1), und
Widerstandsschweißen der Schweißhilfsfügeteile mit der Fahrzeugkarosserie.

13. Verbindungsverfahren gemäß Patentanspruch 11, wobei die Befestigungsenden (20; 30) der Aufprallschutzverstärkung an den Befestigungspunkten jeweils eine Bohrung aufweist, mit dem weiteren Schritt:
Verschrauben der Aufprallschutzverstärkung (1) und der Fahrzeugkonstruktion.

14. Verbindungsverfahren gemäß Patentanspruch 11, mit dem weiteren Schritt:
a) Setzen einer Mehrzahl von Stanznieten jeweils in die Befestigungsenden (20; 30) an den Befestigungspunkten der Aufprallschutzverstärkung (1) und die Fahrzeugkonstruktion oder
b) Setzen einer Mehrzahl von Fließformschrauben in die Befestigungsenden (20; 30) an den Befestigungspunkten der Aufprallschutzverstärkung und die Fahrzeugkonstruktion oder
c) Verbinden der Aufprallschutzverstärkung und der Fahrzeugkonstruktion mit jeweils einer Clinchverbindung an den Befestigungspunkten der Befestigungsenden.

15. Ein Herstellungsverfahren einer Aufprallschutzverstärkung (1) gemäß einem der vorhergehenden Patentansprüche 1 bis 5 aus Aluminium oder einer Aluminiumlegierung, welches die folgenden Schritte aufweist:
H1) Strangpressen oder Stranggießen eines langgestreckten Profilelements als Hohlprofil mit einer Basislage (12) und einer Decklage (14), die über Seitenflächen (16) miteinander verbunden sind, und
H2) Komprimieren von mindestens einem Ende des Profilelements, sodass Basis- (12) und Decklage (14) benachbart zueinander angeordnet und die Seitenflächen (16) lateral auswärts bezogen auf die Längsmittellinie (M_{L}) der Aufprallschutzverstärkung (1) aufgeweitet sind, und/oder Ausschneiden der Basis- (12) oder der Decklage (14) im Bereich des Befestigungsendes (20; 30), sodass mindestens ein Befestigungsende (30) in einer Seitenansicht in Richtung der Quermittellinie (M_{Q}) keilförmig ausgebildet ist und die Befestigungspunkte in der nicht ausgeschnittenen Deck- (12) oder Basislage (14) angeordnet sind.

16. Herstellungsverfahren gemäß Patentanspruch 15 mit dem weiteren Schritt:
H3) Setzen einer Mehrzahl von Schweißhilfsfügeteilen (40) in jedes Befestigungsende (20; 30), um ein Verschweißen mittels Widerstandsschweißen der Aufprallschutzverstärkung (1) mit einer Fahrzeugkonstruktion vorzubereiten.

17. Ein Herstellungsverfahren einer Aufprallschutzverstärkung (1) gemäß einem der vorhergehenden Patentansprüche 1 bis 5 oder Patentanspruch 6, zweite Alternative, aus Metall oder einer Metalllegierung, welches die folgenden Schritte aufweist:
H1) Rollformen, Tiefziehen oder Gießen eines langgestreckten Profilelements als Hohlprofil mit einer Basislage (12) und einer Decklage (14), die über Seitenflächen (16) miteinander verbunden sind, und
H2) Komprimieren von mindestens einem Ende des Profilelements, sodass Basis- (12) und Decklage (14) benachbart zueinander angeordnet und die Seitenflächen (16) lateral auswärts bezogen auf die Längsmittellinie (M_{L}) der Aufprallschutzverstärkung (1) aufgeweitet sind, und/oder Ausschneiden der Basis- (12) oder der Decklage (14) im Bereich des Befestigungsendes (20; 30), sodass mindestens ein Befestigungsende (30) in einer Seitenansicht in Richtung der Quermittellinie (M_{Q}) keilförmig ausgebildet ist und die Befestigungspunkte in der nicht ausgeschnittenen Deck- (12) oder Basislage (14) angeordnet sind.

18. Herstellungsverfahren gemäß Patentanspruch 17 mit dem weiteren Schritt:
Erzeugen einer Mehrzahl von Löchern in jedem Befestigungsende (20; 30), um ein Verschrauben der Aufprallschutzverstärkung (1) mit einer Fahrzeugkonstruktion vorzubereiten.

## Claims

1. An impact protection reinforcement (1) of a vehicle construction, which is supportively fastenable in the vehicle construction against the impact of external mechanical extraordinary load conditions and which comprises the following features:
a. an elongated profile element with a longitudinal center line (M_{L}) and a transverse center line (M_{Q}) arranged transversely to the longitudinal center line (M_{L}), the profile element having in the longitudinal direction at each end side a fastening end (20; 30) and a central part (10) therebetween,
b. the central part (10) consists of a circumferentially closed hollow profile with a base layer (12) and a top layer (14) arranged opposite to the base layer (12), which are connected to each other via lateral faces (16), and
c. the fastening ends (20; 30) each have a planar shape with at least two fastening points which are spaced apart differently from the transverse center line (M_{Q}) and the longitudinal center line (M_{L}) and are provided as connection points, in particular as welding connection points, to the vehicle construction, **characterized in that**
d. the base layer (12) and the top layer (14) of the hollow profile of the central part (10) have a greater thickness than the connecting lateral faces (16) and
e. the impact protection reinforcement (1) has at least at one fastening end (20; 30) only two fastening points for one connection means (40) each, which are spaced apart from each other in the transverse and the longitudinal direction of the impact protection reinforcement (1).

2. An impact protection reinforcement (1) of a vehicle construction, which is supportively fastenable in the vehicle construction against the impact of external mechanical extraordinary load conditions and which comprises the following features:
a. an elongated profile element with a longitudinal center line (M_{L}) and a transverse center line (M_{Q}) arranged transversely to the longitudinal center line (M_{L}), the profile element having in the longitudinal direction at each end side a fastening end (20; 30) and a central part (10) therebetween,
b. the central part (10) consists of a circumferentially closed hollow profile with a base layer (12) and a top layer (14) arranged opposite to the base layer (12), which are connected to each other via lateral faces (16), and
c. the fastening ends (20; 30) each have a planar shape with at least two fastening points which are spaced apart differently from the transverse center line (M_{Q}) and the longitudinal center line (M_{L}) and are provided as connection points, in particular as welding connection points, to the vehicle construction, **characterized in that**
d. the base layer (12) and the top layer (14) of the hollow profile of the central part (10) have a greater thickness than the connecting lateral faces (16) and
e. at least at one fastening end (20; 30), the impact protection reinforcement (1) provides only three fastening points for one connection means (40) each, of which at least two are spaced and positioned apart differently from the transverse center line (M_{Q}) and all are spaced and positioned differently to the longitudinal center line (M_{L}), wherein the fastening ends (20; 30) of the impact protection reinforcement (1) includes at the fastening points
e1. one welding auxiliary joining part (40) each joined therein, which is weldable to a vehicle construction made of steel, or
e2. one bore each via which the impact protection reinforcement is screwable to a vehicle construction.

3. An impact protection reinforcement (1) of a vehicle construction, which is supportively fastenable in the vehicle construction against the impact of external mechanical extraordinary load conditions and which comprises the following features:
a. an elongated profile element with a longitudinal center line (M_{L}) and a transverse center line (M_{Q}) arranged transversely to the longitudinal center line (M_{L}), the profile element having in the longitudinal direction at each end side a fastening end (20; 30) and a central part (10) therebetween,
b. the central part (10) consists of a circumferentially closed hollow profile with a base layer (12) and a top layer (14) arranged opposite to the base layer (12), which are connected to each other via lateral faces (16), and
c. the fastening ends (20; 30) each have a planar shape with at least two fastening points which are spaced apart differently from the transverse center line (M_{Q}) and the longitudinal center line (M_{L}) and are provided as connection points, in particular as welding connection points, to the vehicle construction, **characterized in that**
d. the base layer (12) and the top layer (14) of the hollow profile of the central part (10) have a greater thickness than the connecting lateral faces (16) and
e. at least at one fastening end (20; 30), the impact protection reinforcement (1) provides only four fastening points for one connection means (40) each, of which at least two are spaced apart differently from the transverse center line (M_{Q}) and at least two are spaced differently to the longitudinal center line of the impact protection reinforcement (1).

4. The impact protection reinforcement (1) according to claim 1, 2 or 3, in which at least one fastening end (20; 30) consists of a compressed hollow profile, so that the base layer (12) and the top layer (14) are arranged adjacent to each other in a planar manner and the lateral faces (16) are widened laterally outwardly relative to the longitudinal center line (M_{L}) of the impact protection reinforcement (1).

5. The impact protection reinforcement (1) according to one of the claims 1 to 4, wherein at least one fastening end (20; 30) is formed wedge-like in a lateral view in the direction of the transverse center line (M_{Q}) and the base layer (12) or the top layer (14) is cut out so that the fastening points are arranged in the uncut top layer (14) or base layer (12).

6. The impact protection reinforcement (1) according to claim 1 or 3, the fastening ends (20; 30) of which have at the fastening points one welding auxiliary joining part (40) each joined therein, which is weldable with a vehicle construction made of steel, or the fastening ends (20; 30) have at the fastening points one bore each via which the impact protection reinforcement is screwable to a vehicle construction.

7. The impact protection reinforcement (1) according to one of the preceding claims, which
a) is provided as an extruded or continuously cast aluminum profile consisting of aluminum or an aluminum alloy or which
b) is provided as a roll-formed or deep-drawn metal part, preferably made of steel or a metal alloy, or as a metal cast part.

8. A vehicle construction with at least one impact protection reinforcement (1) according to one of the preceding claims, which is connected to the vehicle construction by means of the fastening ends (20; 30).

9. The vehicle construction according to claim 8 in combination with claim 7 with respect to
a) claim 2, alternative e1, or claim 6, first alternative, wherein the welding auxiliary joining parts (40) set in the fastening ends (20; 30) of the impact protection reinforcement (1) are welded with the vehicle construction by means of a resistance welding method and provide a firm connection between the vehicle construction and the impact protection reinforcement (1), or with respect to
b) claim 2, alternative e2, or claim 6, second alternative, wherein the fastening ends (20; 30) of the impact protection reinforcement (1) are screwed together with the vehicle construction via the plurality of bores provided therein and provide a firm connection between the vehicle construction and the impact protection reinforcement (1).

10. The vehicle construction according to claim 8 in combination with claim 7 with respect to claim 1, 2 or 3, wherein the fastening ends (20; 30) of the impact protection reinforcement (1) are connected to the vehicle construction via the plurality of fastening points provided there, each by means of a punch rivet, a bolt or nail, a flow-forming screw or a clinch connection and provide a firm connection between the vehicle construction and the impact protection reinforcement (1).

11. A connection method of an impact protection reinforcement (1) according to claim 7 with a vehicle construction, which comprises the following steps:
V1) arranging the impact protection reinforcement (1) in the vehicle construction, and
V2) connecting the fastening ends (20; 30) of the impact protection reinforcement (1) at the fastening points with the vehicle construction.

12. The connection method according to claim 11 with the first alternative according to claim 7, with the further step:
setting a plurality of welding auxiliary joining parts (40) each into the fastening ends (20; 30) of the impact protection reinforcement (1), and
resistance welding of the welding auxiliary joining parts with the vehicle body.

13. The connection method according to claim 11, wherein the fastening ends (20; 30) of the impact protection reinforcement each have a bore at the fastening points, with the further step:
screwing together the impact protection reinforcement (1) and the vehicle construction.

14. The connection method according to claim 11, with the further step:
a) setting a plurality of punch rivets each into the fastening ends (20; 30) at the fastening points of the impact protection reinforcement (1) and into the vehicle construction, or
b) setting a plurality of flow-forming screws into the fastening ends (20; 30) at the fastening points of the impact protection reinforcement and into the vehicle construction or
c) connecting the impact protection reinforcement and the vehicle construction with a respective clinch connection at the fastening points of the fastening ends.

15. A manufacturing method of an impact protection reinforcement (1) according to one of the preceding claims 1 to 5 made of aluminum or an aluminum alloy, which comprises the following steps:
H1) extruding or continuously casting an elongated profile element as a hollow profile having a base layer (12) and a top layer (14) which are connected to each other via lateral faces (16), and
H2) compressing at least one end of the profile element so that base layer (12) and top layer (14) are arranged adjacent to each other and the lateral faces (16) are widened laterally outwardly relative to the longitudinal center line (M_{L}) of the impact protection reinforcement (1), and/or cutting out the base layer (12) or the top layer (14) in the portion of the fastening end (20; 30) so that at least one fastening end (30) is formed wedge-like in a lateral view in the direction of the transverse center line (M_{Q}) and the fastening points are arranged in the uncut top layer (12) or base layer (14).

16. The manufacturing method according to claim 15 with the further step:
H3) setting a plurality of welding auxiliary joining parts (40) into each fastening end (20; 30) to prepare a welding by means of resistance welding of the impact protection reinforcement (1) to a vehicle construction.

17. A manufacturing method of an impact protection reinforcement (1) according to one of the preceding claims 1 to 5 or claim 6, second alternative, out of metal or a metal alloy, which comprises the following steps:
H1) roll-forming, deep-drawing or casting an elongated profile element as a hollow profile with a base layer (12) and a top layer (14) which are connected to each other via lateral faces (16), and
H2) compressing at least one end of the profile element so that base layer (12) and top layer (14) are arranged adjacent to each other and the lateral faces (16) are widened laterally outwardly relative to the longitudinal center line (M_{L}) of the impact protection reinforcement (1), and/or cutting out the base layer (12) or the top layer (14) in the portion of the fastening end (20; 30) so that at least one fastening end (30) is formed wedge-like in a lateral view in the direction of the transverse center line (M_{Q}) and the fastening points are arranged in the uncut top layer (12) or base layer (14).

18. The manufacturing method according to claim 17 with the further step:
creating a plurality of holes in each fastening end (20; 30) to prepare a screwing together of the impact protection reinforcement (1) with a vehicle construction.

## Revendications

1. Renforcement de protection contre les chocs (1) d'une construction de véhicule, lequel peut être fixé comme soutien dans la construction de véhicule contre l'action d'états de charges exceptionnelles mécaniques externes et présente les caractéristiques suivantes :
a. un élément profilé allongé avec une ligne médiane longitudinale (M_{L}) et une ligne médiane transversale (M_{Q}) disposée transversalement à la ligne médiane longitudinale (M_{L}), lequel présente respectivement une extrémité de fixation (20 ; 30) côté extrémité dans la direction longitudinale et une partie médiane (10) intermédiaire,
b. la partie médiane (10) est constituée d'un profilé creux fermé circonférentiellement doté d'une couche de base (12) et d'une couche de revêtement (14) disposée en face de la couche de base (12), lesquelles sont raccordées entre elles par des surfaces latérales (16), et
c. les extrémité de fixation (20 ; 30) présentent respectivement une forme plate avec au moins deux points de fixation, lesquels sont espacés différemment de la ligne médiane transversale (M_{Q}) et de la ligne médiane longitudinale (M_{L}) et prévus comme points de raccordement, en particulier comme points de raccordement par soudage, à la construction de véhicule, **caractérisé en ce que**
d. la couche de base (12) et la couche de revêtement (14) du profilé creux de la partie médiane (10) présentent une épaisseur supérieure à celle des surfaces latérales de raccordement (16) et
e. le renforcement de protection contre les chocs (1), à au moins une extrémité de fixation (20 ; 30), ne prévoit que deux points de fixation respectivement pour un moyen de raccordement (40), lesquels sont espacés l'un de l'autre dans la direction transversale et dans la direction longitudinale du renforcement de protection contre les chocs (1).

2. Renforcement de protection contre les chocs (1) d'une construction de véhicule, lequel peut être fixé comme soutien dans la construction de véhicule contre l'action d'états de charges exceptionnelles mécaniques externes et présente les caractéristiques suivantes :
a. un élément profilé allongé avec une ligne médiane longitudinale (M_{L}) et une ligne médiane transversale (M_{Q}) disposée transversalement à la ligne médiane longitudinale (M_{L}), lequel présente respectivement une extrémité de fixation (20 ; 30) côté extrémité dans la direction longitudinale et une partie médiane (10) intermédiaire,
b. la partie médiane (10) est constituée d'un profilé creux fermé circonférentiellement doté d'une couche de base (12) et d'une couche de revêtement (14) disposée en face de la couche de base (12), lesquelles sont raccordées entre elles par des surfaces latérales (16), et
c. les extrémité de fixation (20 ; 30) présentent respectivement une forme plate avec au moins deux points de fixation, lesquels sont espacés différemment de la ligne médiane transversale (M_{Q}) et de la ligne médiane longitudinale (M_{L}) et prévus comme points de raccordement, en particulier comme points de raccordement par soudage, à la construction de véhicule, **caractérisé en ce que**
d. la couche de base (12) et la couche de revêtement (14) du profilé creux de la partie médiane (10) présentent une épaisseur supérieure à celle des surfaces latérales de raccordement (16) et
e. le renforcement de protection contre les chocs (1), à au moins une extrémité de fixation (20 ; 30), ne prévoit que trois points de fixation respectivement pour un moyen de raccordement (40), parmi lesquels au moins deux sont espacés différemment de la ligne médiane transversale (M_{Q}) et tous sont espacés et positionnés différemment par rapport à la ligne médiane longitudinale (M_{L}), dans lequel, aux points de fixation, les extrémités de fixation (20 ; 30) du renforcement de protection contre les chocs (1)
e1. présentent respectivement une pièce auxiliaire d'assemblage par soudage (40) insérée dans celles-ci, laquelle peut être soudée à une construction de véhicule en acier, ou
e2. présentent un alésage par le biais duquel le renforcement de protection contre les chocs peut être vissé dans une construction de véhicule.

3. Renforcement de protection contre les chocs (1) d'une construction de véhicule, lequel peut être fixé comme soutien dans la construction de véhicule contre l'action d'états de charges exceptionnelles mécaniques externes et présente les caractéristiques suivantes :
a. un élément profilé allongé avec une ligne médiane longitudinale (M_{L}) et une ligne médiane transversale (M_{Q}) disposée transversalement à la ligne médiane longitudinale (M_{L}), lequel présente respectivement une extrémité de fixation (20 ; 30) côté extrémité dans la direction longitudinale et une partie médiane (10) intermédiaire,
b. la partie médiane (10) est constituée d'un profilé creux fermé circonférentiellement doté d'une couche de base (12) et d'une couche de revêtement (14) disposée en face de la couche de base (12), lesquelles sont raccordées entre elles par des surfaces latérales (16), et
c. les extrémité de fixation (20 ; 30) présentent respectivement une forme plate avec au moins deux points de fixation, lesquels sont espacés différemment de la ligne médiane transversale (M_{Q}) et de la ligne médiane longitudinale (M_{L}) et prévus comme points de raccordement, en particulier comme points de raccordement par soudage, à la construction de véhicule, **caractérisé en ce que**
d. la couche de base (12) et la couche de revêtement (14) du profilé creux de la partie médiane (10) présentent une épaisseur supérieure à celle des surfaces latérales de raccordement (16) et
e. le renforcement de protection contre les chocs (1), à au moins une extrémité de fixation (20 ; 30), ne prévoit que quatre points de fixation respectivement pour un moyen de raccordement (40), parmi lesquels au moins deux sont espacés différemment de la ligne médiane transversale (M_{Q}) et au moins deux sont espacés différemment de la ligne médiane longitudinale (M_{L}) du renforcement de protection contre les chocs (1).

4. Renforcement de protection contre les chocs (1) selon l'une des revendications 1, 2 ou 3, dans lequel au moins une extrémité de fixation (20 ; 30) est constituée d'un profilé creux comprimé, de sorte que la couche de base (12) et la couche de revêtement (14) sont disposées à plat de façon adjacente l'une à l'autre et les surfaces latérales (16) sont élargies latéralement vers l'extérieur par rapport à la ligne médiane longitudinale (M_{L}) du renforcement de protection contre les chocs (1).

5. Renforcement de protection contre les chocs (1) selon l'une des revendications 1 à 4, dans lequel au moins une extrémité de fixation (20 ; 30) est réalisée en forme de coin dans une vue latérale en direction de la ligne médiane transversale (M_{Q}) et la couche de base (12) ou de revêtement (14) est découpée, de sorte que les points de fixation sont disposés dans la couche de revêtement (14) ou de base (12) non découpée.

6. Renforcement de protection contre les chocs (1) selon la revendication 1 ou 3, dont les extrémités de fixation (20 ; 30), aux points de fixation, présentent respectivement une pièce auxiliaire d'assemblage par soudage (40), laquelle peut être soudée avec une construction de véhicule en acier, ou dont les extrémités de fixation (20 ; 30), aux points de fixation, présentent respectivement un alésage, par le biais duquel le renforcement de protection contre les chocs peut être vissé dans une construction de véhicule.

7. Renforcement de protection contre les chocs (1) selon l'une des revendications précédentes, lequel
a) est prévu sous la forme d'un profilé en aluminium extrudé ou coulé en continu, constitué d'aluminium ou d'un alliage d'aluminium ou lequel
b) est prévu sous la forme d'une pièce métallique formée par roulage ou emboutie, de préférence en acier ou en un alliage métallique, ou sous la forme d'une pièce coulée métallique.

8. Construction de véhicule comprenant au moins un renforcement de protection contre les chocs (1) selon l'une des revendications précédentes, lequel est raccordé à la construction de véhicule par les extrémités de fixation (20 ; 30).

9. Construction de véhicule selon la revendication 8 en combinaison avec la revendication 7 en rapport avec
a) la revendication 2, alternative e1, ou la revendication 6, première alternative, dans laquelle les pièces auxiliaires d'assemblage par soudage (40) placées dans les extrémités de fixation (20 ; 30) du renforcement de protection contre les chocs (1) sont soudées à la construction de véhicule à l'aide d'un procédé de soudage par résistance et fournissent un raccordement solide entre la construction de véhicule et le renforcement de protection contre les chocs (1), ou en rapport avec
b) la revendication 2, alternative e2, ou la revendication 6, deuxième alternative, dans laquelle les extrémités de fixation (20 ; 30) du renforcement de protection contre les chocs (1) sont vissées dans la construction de véhicule par le biais d'une pluralité d'alésages prévus dans celui-ci et fournissent un raccordement solide entre la construction de véhicule et le renforcement de protection contre les chocs (1).

10. Construction de véhicule selon la revendication 8 en combinaison avec la revendication 7 en rapport avec la revendication 1, 2 ou 3, dans laquelle les extrémités de fixation (20 ; 30) du renforcement de protection contre les chocs (1) sont raccordées à la construction de véhicule par la pluralité de points de fixation prévus à cet endroit, respectivement à l'aide d'un rivet auto-perforant, d'un boulon ou d'un clou, d'une vis FDS ou d'une liaison par clinchage et fournissent un raccordement solide entre la construction de véhicule et le renforcement de protection contre les chocs (1).

11. Procédé de raccordement d'un renforcement de protection contre les chocs (1) selon la revendication 7 à une construction de véhicule, présentant les étapes suivantes :
V1) agencement du renforcement de protection contre les chocs (1) dans la construction de véhicule et
V2) raccordement des extrémités de fixation (20 ; 30) du renforcement de protection contre les chocs (1) à la construction de véhicule au niveau des points de fixation.

12. Procédé de raccordement selon la revendication 11 avec la première alternative selon la revendication 7, comprenant l'étape supplémentaire suivante :
pose d'une pluralité de pièces auxiliaires d'assemblage par soudage (40) respectivement dans les extrémités de fixation (20 ; 30) du renforcement de protection contre les chocs (1), et
soudage par résistance des pièces auxiliaires d'assemblage par soudage avec la carrosserie de véhicule.

13. Procédé de raccordement selon la revendication 11, dans lequel les extrémité de fixation (20 ; 30) du renforcement de protection contre les chocs présente respectivement un alésage au niveau des points de fixation, comprenant l'étape supplémentaire suivante :
vissage du renforcement de protection contre les chocs (1) et de la construction de véhicule.

14. Procédé de raccordement selon la revendication 11, comprenant l'étape supplémentaire suivante :
a) pose d'une pluralité de rivets auto-perforants respectivement dans les extrémités de fixation (20 ; 30) au niveau des points de fixation du renforcement de protection contre les chocs (1) et dans la construction de véhicule ou
b) pose d'une pluralité de vis FDS dans les extrémités de fixation (20 ; 30) au niveau des points de fixation du renforcement de protection contre les chocs et dans la construction de véhicule ou
c) raccordement du renforcement de protection contre les chocs et de la construction de véhicule respectivement à l'aide d'une liaison par clinchage au niveau des points de fixation des extrémités de fixation.

15. Procédé de fabrication d'un renforcement de protection contre les chocs (1) selon l'une des revendications précédentes 1 à 5 en aluminium ou en un alliage d'aluminium, lequel présente les étapes suivantes :
H1) extrusion ou coulée continue d'un élément profilé allongé en tant que profilé creux avec une couche de base (12) et une couche de revêtement (14), lesquelles sont raccordées l'une à l'autre par des surfaces latérales (16), et
H2) compression d'au moins une extrémité de l'élément profilé, de sorte que la couche de base (12) et la couche de revêtement (14) sont disposées de façon adjacente l'une à l'autre et que les surfaces latérales (16) sont élargies latéralement vers l'extérieur par rapport à la ligne médiane longitudinale (M_{L}) du renforcement de protection contre les chocs (1), et/ou découpage de la couche de base (12) ou de revêtement (14) dans la région de l'extrémité de fixation (20 ; 30), de sorte qu'au moins une extrémité de fixation (30) est réalisée en forme de coin dans une vue latérale en direction de la ligne médiane transversale (M_{Q}) et que les points de fixation sont disposés dans la couche de revêtement (14) ou de base (12) non découpée.

16. Procédé de fabrication selon la revendication 15, comprenant l'étape supplémentaire suivante :
H3) pose d'une pluralité de pièces auxiliaires d'assemblage par soudage (40) dans chaque extrémité de fixation (20 ; 30), afin de préparer un soudage au moyen d'un soudage par résistance du renforcement de protection contre les chocs (1) avec une construction de véhicule.

17. Procédé de fabrication d'un renforcement de protection contre les chocs (1) selon l'une des revendications précédentes 1 à 5 ou selon la revendication 6, deuxième alternative, en métal ou en un alliage métallique, lequel présente les étapes suivantes :
H1) roulage, emboutissage ou coulée d'un élément profilé allongé en tant que profilé creux avec une couche de base (12) et une couche de revêtement (14), lesquelles sont raccordées l'une à l'autre par des surfaces latérales (16), et
H2) compression d'au moins une extrémité de l'élément profilé, de sorte que la couche de base (12) et la couche de revêtement (14) sont disposées de façon adjacente l'une à l'autre et que les surfaces latérales (16) sont élargies latéralement vers l'extérieur par rapport à la ligne médiane longitudinale (M_{L}) du renforcement de protection contre les chocs (1), et/ou découpage de la couche de base (12) ou de revêtement (14) dans la région de l'extrémité de fixation (20 ; 30), de sorte qu'au moins une extrémité de fixation (30) est réalisée en forme de coin dans une vue latérale en direction de la ligne médiane transversale (M_{Q}) et que les points de fixation sont disposés dans la couche de revêtement (14) ou de base (12) non découpée.

18. Procédé de fabrication selon la revendication 17, comprenant l'étape supplémentaire suivante :
réalisation d'une pluralité de trous dans chaque extrémité de fixation (20 ; 30), pour préparer un vissage du renforcement de protection contre les chocs (1) avec une construction de véhicule.
